# EUROPEAN PATENT APPLICATION

(11) **EP 3 409 831 A1**
(43) Date of publication of application: **05.12.2018**
(21) Application number: 17744337.1
(22) Date of filing: 26.01.2017
(51) Int. Cl.: D06P 5/00, B41J 2/01, B41M 5/00, C08F 220/34, C08G 18/08, C08G 18/38, C09B 67/20, C09B 69/10, C09D 11/328, D06P 1/00, D06P 3/54, D06P 3/60, D06P 5/20

(54) **INKJET PRINTING METHOD, INKJET INK, INK CARTRIDGE, AND COLORED FABRIC**

(30) Priority: 29.01.2016 JP 2016016399; 25.01.2017 JP 2017011581
(71) Applicant: FUJIFILM Corporation, Minato-ku Tokyo 106-8620 (JP)
(72) Inventor: FUJIE Yoshihiko, Ashigarakami-gun Kanagawa 258-8577 (JP); NAGATA Yoshiaki, Ashigarakami-gun Kanagawa 258-8577 (JP); TANI Yukio, Ashigarakami-gun Kanagawa 258-8577 (JP); HARA Minako, Ashigarakami-gun Kanagawa 258-8577 (JP); TATEISHI Keiichi, Ashigarakami-gun Kanagawa 258-8577 (JP); KOBAYASHI Hiromi, Ashigarakami-gun Kanagawa 258-8577 (JP)
(74) Representative: Klunker IP Patentanwälte PartG mbB
(86) International application number: PCT/JP2017/002788
(87) International publication number: WO 2017/131107

(57) **Abstract**

Provided are an inkjet printing method including at least a step of directly printing an inkjet ink containing an aqueous dispersion of a dye polymer having a repeating unit containing a structure derived from a dye on a fabric by an inkjet method; an inkjet ink containing the aqueous dispersion of a dye polymer; an ink cartridge filled with the inkjet ink; and a colored fabric.

## Description

### BACKGROUND OF THE INVENTION

### 1. Field of the Invention

The present invention relates to an inkjet printing method, an inkjet ink, an ink cartridge, and a colored fabric.

### 2. Description of the Related Art

Conventionally, coloring agents used for coloring fabrics are either dyes or pigments. A screen printing method, a roller printing method, a transfer method, an inkjet method, and the like have been carried out as methods for industrial coloring of fabrics using these coloring agents. In particular, the inkjet method does not need to produce a plate as compared with other methods and is capable of quickly forming an image with excellent gradation. Furthermore, it can be said that the inkjet method is an excellent image forming method having an environmental advantage such as a small amount of waste liquid because it uses only a necessary amount of ink as a formed image.

For example, JP2002-348502A discloses inkjet printing in which an ink is prepared by dissolving a dye in water and the fabric is dyed by an inkjet method.

Since each dye molecule interacts with fibers to enter the inside of the fibers and integrates with the fibers, the fabric dyed with the dye is soft in texture and is preferred for high quality in a clothing item. On the other hand, in order to prevent bleeding (to improve clarity), inkjet printing using a dye needs to previously apply a printing paste, which is a pretreatment agent, to the fabric. In addition, after dyeing, it is necessary to steam-heat the colored fabric to fix the dye, and then to wash the excess dye or the printing paste as the pretreatment agent by a step such as water washing or soaping. For this reason, the process is complicated, it takes time and labor for equipment, and wastewater is generated.

Further, in coloring with a dye, it is necessary to appropriately select and use the type of dye depending on the type of fiber. For example, reactive dyes or direct dyes for cellulose fibers such as cotton and hemp, acidic dyes for animal fibers such as wool and silk, acidic dyes or disperse dyes for nylon fibers, disperse dyes for polyester fibers, cationic dyes for acrylic fibers, and the like are used.

An inkjet sublimation transfer printing method has been widely put into practical use as a dyeing method which suppresses complications of the process, problems involving equipment and labor, and problems of wastewater in the above-mentioned conventional inkjet printing (see, for example, JP1998-58638A (JP-H10-58638A)). The inkjet sublimation transfer printing method is a method in which a pattern to be printed is printed on a transfer paper by ink including resin particles containing a disperse dye using an inkjet printer, and the transfer paper and a polyester fabric are superimposed and subjected to a heat treatment to transfer a sublimable dye from the resin particles to the polyester fabric.

However, the mechanism of dyeing in this method is called a thermal diffusion or thermal sublimation of dye molecules, or a phenomenon in which both thermal diffusion and thermal sublimation of dye particles occur. This method is mainly applied to the dyeing of polyester fabrics since a sublimation dye, which is a kind of disperse dye, is used as a dye to be used, due to the scheme of that method. Also, since the used transfer paper cannot be recycled, it becomes industrial waste.

On the other hand, an inkjet coloring method using a pigment has also been studied (see, for example, JP2010-37700A). In this method, a pigment and a surfactant as a dispersant are mixed in water, and then finely dispersed together with glass beads, zirconia beads, titania beads, stainless steel balls, or the like using an attritor, a mill, or the like, and the resulting dispersion is used as a coloring agent. Then, this coloring agent is diluted by a reducer blended with a pigment fixing emulsion resin to prepare a pigment ink, which is then attached to fibers by an inkjet method, and the resin is fused with a heating roller to fix the pigment.

Unlike the coloring method using a dye, the coloring method using a pigment does not require the selection of a coloring agent by a fiber type and does not require complicated steam heating (steaming) and water washing steps, so that the fiber can be colored and the pigment can be fixed to the fiber in a very simple manner.

However, the pigment is attached (adhered) to the fiber in the form of particles in which dye molecules are gathered, it is necessary to use a large amount of emulsion resin as a fixing agent in order to maintain fastness such as washing fastness and rubbing fastness of the colored fabric, and the texture of the colored fabric becomes stiff. For example, in the case where the colored fabric is a clothing item, the quality of the clothing item is inferior to the colored fabric dyed with a dye. In addition, the emulsion resin is dried by volatilization of water, the pigment ink is thickened, and clogging of the inkjet printer is likely to occur, which results in inferior workability.

Further, JP2004-534106A discloses an inkjet ink containing a polymer having a specific structure in which a specific dye is linked to a polymer skeleton.

Further, JP2002-509957A discloses an inkjet ink containing a polyurethane having a structure of a coloring agent.

### SUMMARY OF THE INVENTION

As described above, coloring with a dye is excellent in terms of the quality (texture) and fastness of the colored fabric, but the selection of a dye depending on the fiber type is necessary and there are problems such as complications of processes such as the necessity of pretreatment steps, a problem requiring equipment, and a problem of being inferior in terms of environmental load, such as wastewater and waste materials. On the other hand, coloring with a pigment does not require the selection of a dye depending on the fiber type and is simple in terms of process, but has a problem in workability such as clogging of an inkjet printer due to thickening of an ink, and a problem in that the quality (texture) of the colored fabric is inferior in many cases.

Also, in JP2004-534106A and JP2002-509957A, there is no specific disclosure about fabric printing, and none of the above-mentioned problems are described.

In view of the above-mentioned problems, an object of the present invention is to provide an inkjet printing method capable of dyeing various kinds of fabrics, requiring no pretreatment step, having less environmental load, having no problem in workability, exhibiting excellent clarity and fastness of an image to be obtained, and also exhibiting excellent quality (texture) of colored fabric. Another object of the present invention is to provide an inkjet ink capable of dyeing various kinds of fabrics, requiring no pretreatment step, having less environmental load, having no problem in workability, and capable of providing an image having excellent clarity and fastness and a colored fabric having excellent quality (texture); an ink cartridge filled with an inkjet ink; and a colored fabric.

As a result of extensive studies to achieve the above-mentioned objects, the present inventors have found that, by a method of directly printing on a fabric by an inkjet method using an aqueous dispersion of a dye polymer having a repeating unit containing a structure derived from a dye, various types of fabrics can be dyed, no pretreatment step is required, environmental load is low, workability is not problematic, and a colored fabric having excellent quality is obtained.

Details are unknown as a mechanism by which the above objects can be achieved by the above method, but the present inventors speculate as follows.

Since an aqueous dispersion of a dye polymer having a repeating unit containing a structure derived from a dye contains the dye polymer in the form of an aqueous dispersion rather than an aqueous solution, no bleeding occurs even in the case where the ink is directly printed on the fabric by an inkjet method like pigment particles, and a pretreatment step is unnecessary and a water washing step is also unnecessary, so that no wastewater is generated. In addition, since it is directly printed on a fabric, waste such as transfer paper does not occur. Since no emulsion resin as a fixing agent is used, unlike a pigment ink, thickening of an ink does not occur and workability is excellent. Furthermore, it is believed that the dye polymer integrates with the fiber at the molecular level so as to cover the surface of the fiber regardless of fiber type. For this reason, it is considered that the fabric made of various kinds of fibers can be dyed and a colored fabric with excellent quality can be obtained.

In the present invention, the "directly printing" an inkjet ink on a fabric by an inkjet method refers to both a case where a transfer step is not necessary and the inkjet ink is directly printed on the fabric, and a case where a pretreatment step is not necessary and the inkjet ink is directly printed on the fabric.

Specifically, the objects of the present invention have been achieved by the following means.
<1> An inkjet printing method, comprising:
   at least a step of directly printing an inkjet ink containing an aqueous dispersion of a dye polymer having a repeating unit containing a structure derived from a dye on a fabric by an inkjet method.
<2> The inkjet printing method according to <1>, further comprising:
   a heat treatment step.
<3> The inkjet printing method according to <1> or <2>, in which the inkjet ink further contains an aqueous organic solvent.
<4> The inkjet printing method according to any one of <1> to <3>, in which the dye is a dye selected from azo, stilbene, diarylmethane, triarylmethane, xanthene, acridine, quinoline, polymethine, monomethine, azomethine, indoaniline, indophenol, nigrosine, oxazine, thiazine, anthraquinone, indigo, quinophthalone, porphyrin, cyanine, and phthalocyanine.
<5> The inkjet printing method according to any one of <1> to <4>, in which the dye polymer is a dye polymer having a repeating unit represented by General Formula (1) or (10) as the repeating unit containing a structure derived from a dye.

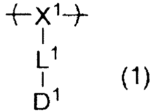

In General Formula (1), X¹ represents a linking group, L¹ represents a single bond or a divalent linking group, and D¹ represents a dye residue obtained by removing one hydrogen atom from a dye.

(̵X²-D²-X³)̵ (10)

In General Formula (10), X² and X³ each independently represent a linking group, and D² represents a dye residue obtained by removing two hydrogen atoms from a dye.
<6> The inkjet printing method according to <5>, in which D¹ in General Formula (1) or D² in General Formula (10) represents a dye residue obtained by removing one or two hydrogen atoms from a dye represented by any one of General Formulae (M1) to (M9).

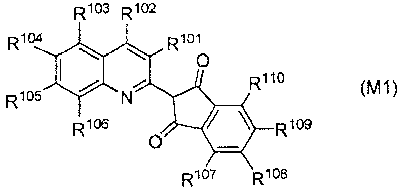

In General Formula (M1), R¹⁰¹ to R¹¹⁰ each independently represent a hydrogen atom or a substituent.

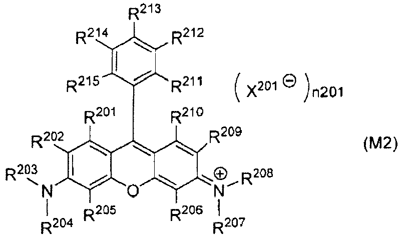

In General Formula (M2), R²⁰¹ to R²¹⁵ each independently represent a hydrogen atom or a substituent, X²⁰¹ represents a monovalent anion, and n201 represents 0 or 1.

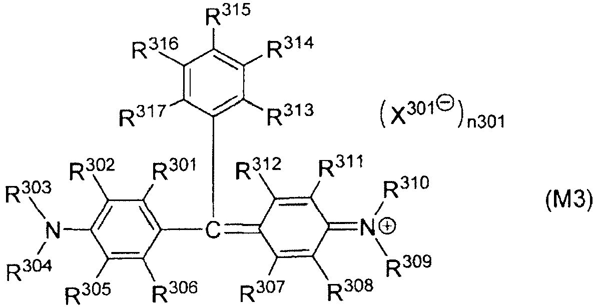

In General Formula (M3), R³⁰¹ to R³¹⁷ each independently represent a hydrogen atom or a substituent, X³⁰¹ represents a monovalent anion, and n301 represents 0 or 1.

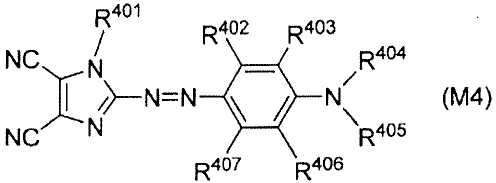

In General Formula (M4), R⁴⁰¹ to R⁴⁰⁷ each independently represent a hydrogen atom or a substituent.

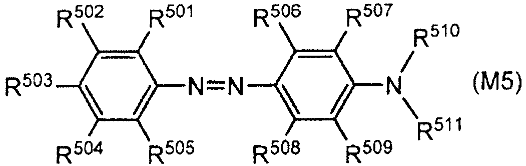

In General Formula (M5), R⁵⁰¹ to R⁵¹¹ each independently represent a hydrogen atom or a substituent.

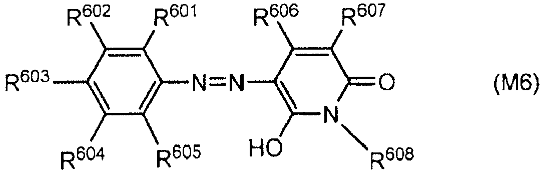

In General Formula (M6), R⁶⁰¹ to R⁶⁰⁸ each independently represent a hydrogen atom or a substituent.

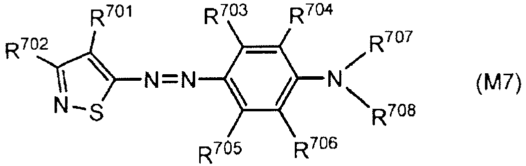

In General Formula (M7), R⁷⁰¹ to R⁷⁰⁸ each independently represent a hydrogen atom or a substituent.

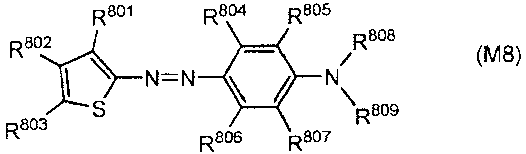

In General Formula (M8), R⁸⁰¹ to R⁸⁰⁹ each independently represent a hydrogen atom or a substituent.

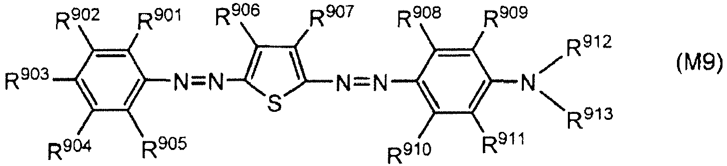

In General Formula (M9), R⁹⁰¹ to R⁹¹³ each independently represent a hydrogen atom or a substituent.
<7> The inkjet printing method according to <6>, in which D¹ in General Formula (1) or D² in General Formula (10) represents a dye residue obtained by removing one or two hydrogen atoms from a dye represented by any one of General Formulae (M1) to (M4).
<8> The inkjet printing method according to any one of <1> to <7>, in which the dye polymer is an acrylic polymer, a urethane polymer, or a styrene polymer.
<9> The inkjet printing method according to any one of <1> to <8>, in which an amount of an ionic group in the dye polymer is 0.1 to 1.8 mmol/g.
<10> The inkjet printing method according to any one of <1> to <9>, in which the dye polymer has a glass transition point of 200°C or lower.
<11> The inkjet printing method according to any one of <1> to <10>, in which the dye polymer melts at 200°C or lower.
<12> The inkjet printing method according to any one of <1> to <11>, in which the dye polymer in the aqueous dispersion of the dye polymer is a particulate dye polymer, and the particulate dye polymer has an average particle diameter of 50 to 500 nm.
<13> The inkjet printing method according to any one of <1> to <12>, in which the dye polymer has a weight-average molecular weight of 3,000 to 2,000,000.
<14> An inkjet ink for printing, comprising:
   at least an aqueous dispersion of a dye polymer having a repeating unit containing a structure derived from a dye.
<15> The inkjet ink according to <14>, in which the dye polymer is a dye polymer having a repeating unit represented by General Formula (1) or (10) as the repeating unit containing a structure derived from a dye,

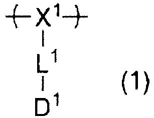

In General Formula (1), X¹ represents a linking group, L¹ represents a single bond or a divalent linking group, and D¹ represents a dye residue obtained by removing one hydrogen atom from a dye.

(̵X²-D²-X³)̵ (10)

In General Formula (10), X² and X³ each independently represent a linking group, and D² represents a dye residue obtained by removing two hydrogen atoms from a dye.
<16> The inkjet ink according to <15>, in which D¹ in General Formula (1) or D² in General Formula (10) represents a dye residue obtained by removing one or two hydrogen atoms from a dye represented by any one of General Formulae (M1) to (M9).

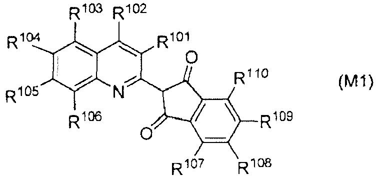

In General Formula (M1), R¹⁰¹ to R¹¹⁰ each independently represent a hydrogen atom or a substituent.

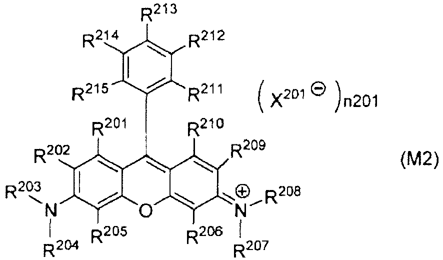

In General Formula (M2), R²⁰¹ to R²¹⁵ each independently represent a hydrogen atom or a substituent, X²⁰¹ represents a monovalent anion, and n201 represents 0 or 1.

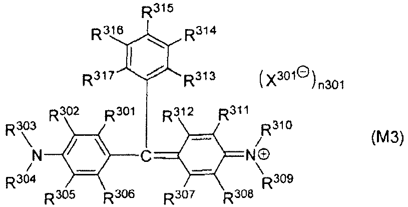

In General Formula (M3), R³⁰¹ to R³¹⁷ each independently represent a hydrogen atom or a substituent, X³⁰¹ represents a monovalent anion, and n301 represents 0 or 1.

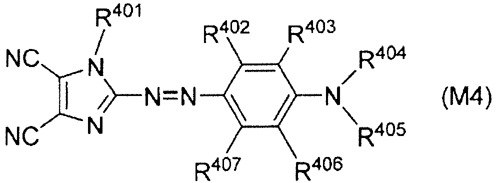

In General Formula (M4), R⁴⁰¹ to R⁴⁰⁷ each independently represent a hydrogen atom or a substituent.

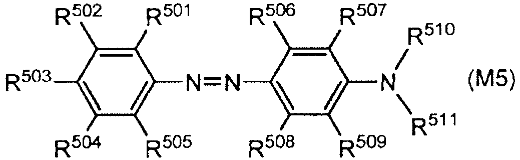

In General Formula (M5), R⁵⁰¹ to R⁵¹¹ each independently represent a hydrogen atom or a substituent.

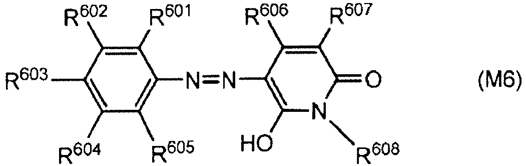

In General Formula (M6), R⁶⁰¹ to R⁶⁰⁸ each independently represent a hydrogen atom or a substituent.

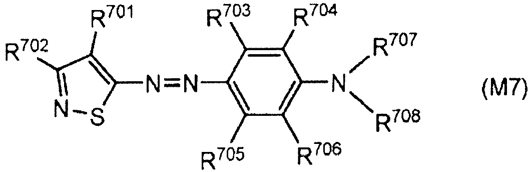

In General Formula (M7), R⁷⁰¹ to R⁷⁰⁸ each independently represent a hydrogen atom or a substituent.

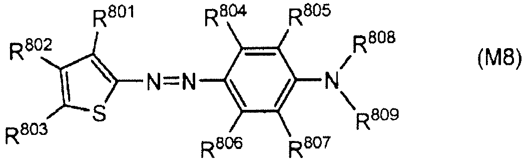

In General Formula (M8), R⁸⁰¹ to R⁸⁰⁹ each independently represent a hydrogen atom or a substituent.

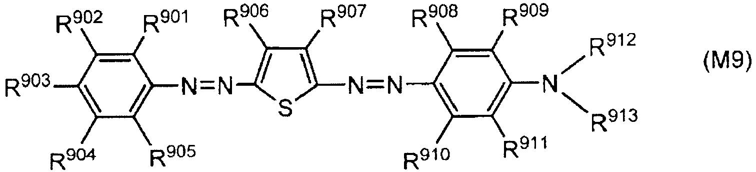

In General Formula (M9), R⁹⁰¹ to R⁹¹³ each independently represent a hydrogen atom or a substituent.
<17> The inkjet ink according to <16>, in which D¹ in General Formula (1) or D² in General Formula (10) represents a dye residue obtained by removing one or two hydrogen atoms from a dye represented by any one of General Formulae (M1) to (M4).
<18> The inkjet ink according to any one of <14> to <17>, in which the dye polymer is an acrylic polymer, a urethane polymer, or a styrene polymer.
<19> The inkjet ink according to any one of <14> to <18>, in which an amount of an ionic group in the dye polymer is 0.1 to 1.8 mmol/g.
<20> The inkjet ink according to any one of <14> to <19>, in which the dye polymer has a glass transition point of 200°C or lower.
<21> The inkjet ink according to any one of <14> to <20>, in which the dye polymer melts at 200°C or lower.
<22> The inkjet ink according to any one of <14> to <21>, further comprising: an aqueous organic solvent.
<23> The inkjet ink according to any one of <14> to <22>, in which the dye polymer in an aqueous dispersion of the dye polymer having a repeating unit containing a structure derived from a dye is a particulate dye polymer and the particulate dye polymer has an average particle diameter of is 50 to 500 nm.
<24> The inkjet ink according to any one of <14> to <23>, in which the dye polymer has a weight-average molecular weight of 3,000 to 2,000,000.
<25> An ink cartridge filled with the inkjet ink according to any one of <14> to <24>.
<26> A colored fabric, comprising:
   a fabric; and
   a dye polymer having a repeating unit containing a structure derived from a dye.
<27> The colored fabric according to <26>, in which the dye polymer is a dye polymer having a repeating unit represented by General Formula (1) or (10).

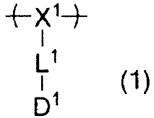

In General Formula (1), X¹ represents a linking group, L¹ represents a single bond or a divalent linking group, and D¹ represents a dye residue obtained by removing one hydrogen atom from a dye.

(̵X²-D²-X³)̵ (10)

In General Formula (10), X² and X³ each independently represent a linking group, and D² represents a dye residue obtained by removing two hydrogen atoms from a dye.
<28> The colored fabric according to <27>, in which D¹ in General Formula (1) or D² in General Formula (10) represents a dye residue obtained by removing one or two hydrogen atoms from a dye represented by any one of General Formulae (M1) to (M9).

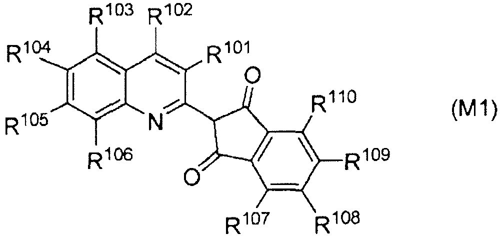

In General Formula (M1), R¹⁰¹ to R¹¹⁰ each independently represent a hydrogen atom or a substituent.

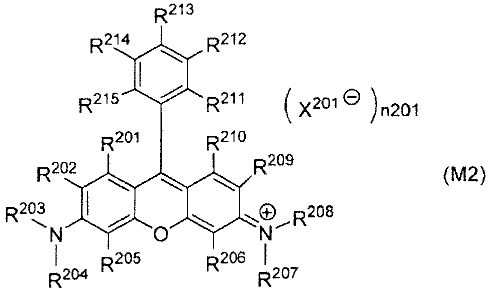

In General Formula (M2), R²⁰¹ to R²¹⁵ each independently represent a hydrogen atom or a substituent, X²⁰¹ represents a monovalent anion, and n201 represents 0 or 1.

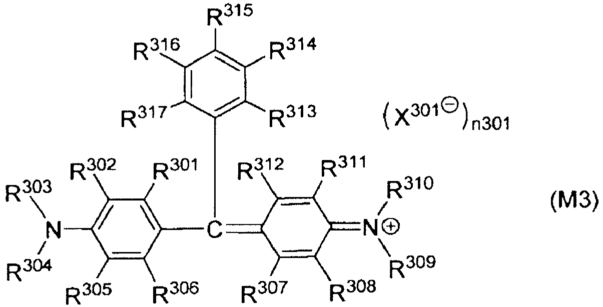

In General Formula (M3), R³⁰¹ to R³¹⁷ each independently represent a hydrogen atom or a substituent, X³⁰¹ represents a monovalent anion, and n301 represents 0 or 1.

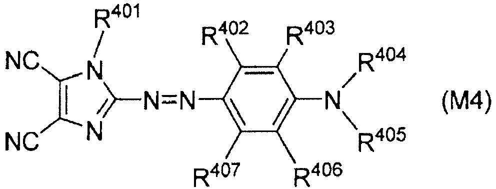

In General Formula (M4), R⁴⁰¹ to R⁴⁰⁷ each independently represent a hydrogen atom or a substituent.

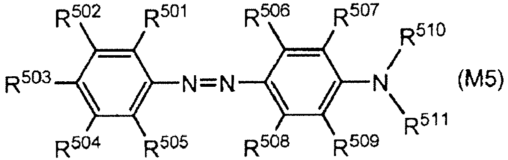

In General Formula (M5), R⁵⁰¹ to R⁵¹¹ each independently represent a hydrogen atom or a substituent.

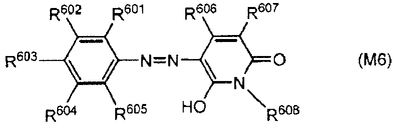

In General Formula (M6), R⁶⁰¹ to R⁶⁰⁸ each independently represent a hydrogen atom or a substituent.

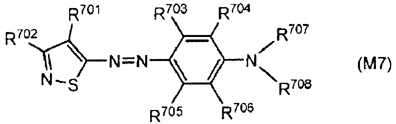

In General Formula (M7), R⁷⁰¹ to R⁷⁰⁸ each independently represent a hydrogen atom or a substituent.

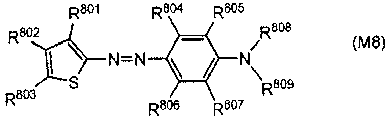

In General Formula (M8), R⁸⁰¹ to R⁸⁰⁹ each independently represent a hydrogen atom or a substituent.

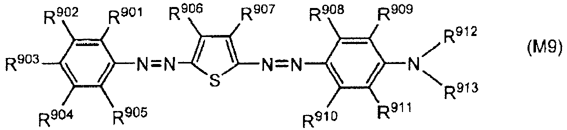

In General Formula (M9), R⁹⁰¹ to R⁹¹³ each independently represent a hydrogen atom or a substituent.
<29> The colored fabric according to <28>, in which D¹ in General Formula (1) or D² in General Formula (10) represents a dye residue obtained by removing one or two hydrogen atoms from a dye represented by any one of General Formulae (M1) to (M4).

According to the present invention, it is possible to provide an inkjet printing method capable of dyeing various kinds of fabrics, requiring no pretreatment step, having less environmental load, having no problem in workability, exhibiting excellent clarity and fastness of an image to be obtained, and also exhibiting excellent quality (texture) of colored fabric. Further, according to the present invention, it is possible to provide an inkjet ink capable of dyeing various kinds of fabrics, requiring no pretreatment step, having less environmental load, having no problem in workability, and capable of providing an image having excellent clarity and fastness and a colored fabric having excellent quality (texture); an ink cartridge filled with an inkjet ink; and a colored fabric.

### DESCRIPTION OF THE PREFERRED EMBODIMENTS

Hereinafter, the present invention will be described in detail. In the present specification, the "(meth)acrylate" represents at least one of acrylate or methacrylate, the "(meth)acrylic" represents at least one of acrylic or methacrylic, and the "(meth)acryloyl" represents at least one of acryloyl or methacryloyl.

### <Dye polymer having repeating unit containing structure derived from dye>

The dye polymer having a repeating unit containing a structure derived from a dye (also referred to simply as "dye polymer"), which is used in the present invention, is a dye multimer containing a structure derived from any dye as a repeating unit. In the dye polymer, the structure derived from a dye may be linked by a covalent bond as a side chain to the main chain of the repeating unit containing the structure derived from a dye, or may be incorporated into the main chain in a state of being covalently bonded to another structure constituting the main chain.

The structure derived from a dye is preferably a structure derived from a dye as classified by color index.

Examples of the dye include azo (monoazo, disazo, trisazo, or polyazo), stilbene, carotenoid, diarylmethane, triarylmethane, xanthene, acridine, quinoline, methine (monomethine or polymethine), azomethine, aniline, indoaniline, indamine, indophenol, azine, oxazine, thiazine, anthraquinone, indigo, quinophthalone, nigrosine, porphyrin, cyanine, and phthalocyanine.

The dye is preferably a dye selected from azo, stilbene, diarylmethane, triarylmethane, xanthene, acridine, quinoline, polymethine, monomethine, azomethine, indoaniline, indophenol, nigrosine, oxazine, thiazine, anthraquinone, indigo, quinophthalone, porphyrin, cyanine, and phthalocyanine. The dye is more preferably a dye selected from azo, stilbene, diarylmethane, triarylmethane, xanthene, indoaniline, indophenol, nigrosine, anthraquinone, quinophthalone, and phthalocyanine, from the viewpoint of coloring power.

The structure derived from a dye in the present invention is not limited to the structure itself which is commercially available as a dye. It is sufficient that the dye-derived structure has a structure known to be usable as a dye such as azo or stilbene. For example, it includes structures in which these structures are left from commercially available dyes and other substituents and the like are changed.

The dye may be either a dye which is soluble in water or a dye which is insoluble in water, but from the viewpoints of water resistance and washing resistance of the dye polymer, the dye is preferably a dye which is insoluble in water. Further, the dye is preferably a dye that does not have an ionic group such as a carboxyl group, a sulfo group, a phosphate group, or a salt thereof, or an ammonium group. Such a dye is not particularly limited. For example, a water-insoluble dye such as a disperse dye may be used, or a dye structure in which an ionic group is removed from a water-soluble dye may be used.

As the dye polymer, a polymer containing a structure derived from a dye in the main chain or side chain is particularly preferably used. The polymer constituting the main chain in the polymer containing a structure derived from a dye in the main chain or the side chain is not particularly limited, but an acrylic polymer, a urethane polymer, or a styrene polymer is preferably used, and in particular, an acrylic polymer or a urethane polymer is preferable.

The acrylic polymer in the present invention is a polymer having at least one repeating unit out of the group consisting of a repeating unit derived from (meth)acrylic acid and a repeating unit derived from a (meth)acrylic acid ester. The urethane polymer in the present invention is a polymer having a urethane bond in the main chain and is formed by a reaction between a diol compound and a diisocyanate compound. In some cases, it is called polyurethane. The styrene polymer in the present invention refers to a polymer having a repeating unit derived from styrene.

In the dye polymer, any method of introducing a repeating unit containing a structure derived from a dye is optional, and a polymerizable dye monomer may be polymerized or copolymerized to obtain a multimer. Alternatively, after the polymer is formed, a structure derived from a dye may be introduced by a polymer reaction or the like.

The dye polymer is preferably a dye polymer containing a repeating unit represented by General Formula (1) or (10).

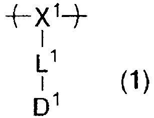

In General Formula (1), X¹ represents a linking group, L¹ represents a single bond or a divalent linking group, and D¹ represents a dye residue obtained by removing one hydrogen atom from a dye.

(̵X²-D²-X³)̵ (10)

In General Formula (10), X² and X³ each independently represent a linking group, and D² represents a dye residue obtained by removing two hydrogen atoms from a dye.

### [Repeating unit represented by General Formula (1)]

First, the repeating unit represented by General Formula (1) will be described.

In General Formula (1), X¹ represents a linking group. X¹ is preferably a linking group formed by polymerization, and it is preferably a moiety corresponding to the main chain formed by a polymerization reaction. That is, X' is preferably a partial structure of the polymer main chain. Examples of X¹ include a linking group formed by polymerizing a substituted or unsubstituted unsaturated ethylene group, a linking group formed by ring-opening polymerization of a cyclic ether, a linking group formed by urethane polymerization of a substituted diol, a linking group formed by urea polymerization of a substituted diamine, and a linking group formed by urethane urea polymerization of a substituent having an amino group and a hydroxyl group, among which preferred is a linking group formed by polymerizing an unsaturated ethylene group, a linking group formed by urethane polymerization of a substituted diol, or a linking group formed by urea polymerization of a substituted diamine. Specific examples thereof include, but are not limited to, the following linking groups. It is indicated that L¹ is connected to the site indicated by * in (X-1) to (X-15) below.

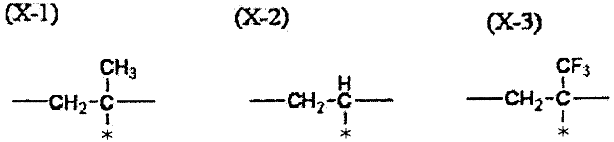

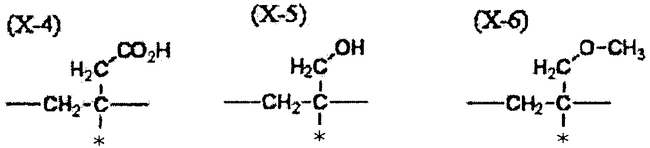

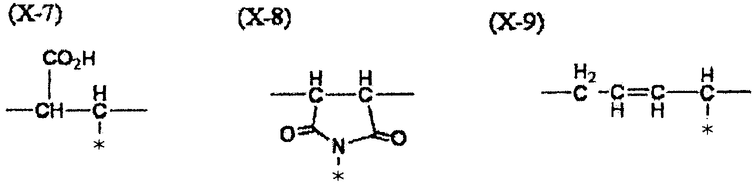

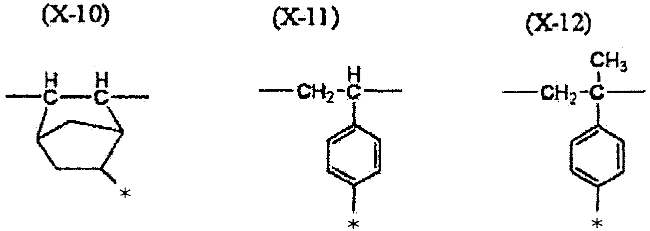

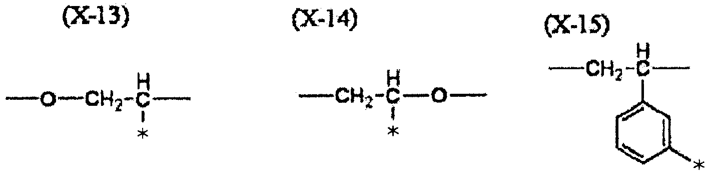

The repeating unit represented by General Formula (1) is preferably a repeating unit represented by any one of General Formulae (1-1) to (1-7) and more preferably a repeating unit represented by General Formula (1-1).

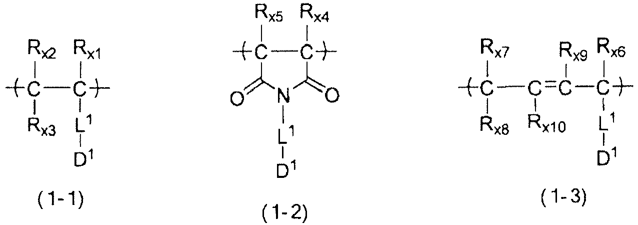

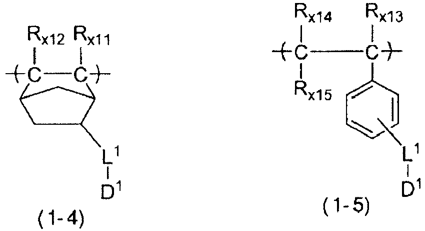

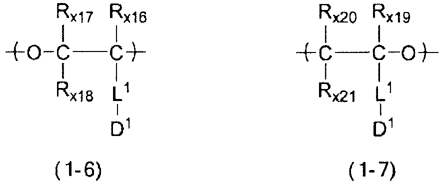

In General Formulae (1-1) to (1-7), R_{X1} to R_{X21} each represent a hydrogen atom or a substituent, L¹ represents a single bond or a divalent linking group, and D' represents a dye residue obtained by removing one hydrogen atom from a dye.

In the case where Rxi to R_{X21} represent a substituent, the substituent is preferably an alkyl group, a halogen atom, a hydroxyl group, a carboxyl group, or a group formed by combining these groups, more preferably an alkyl group, and still more preferably a methyl group.

It is preferred that R_{X1}, R_{X6}, R_{X13}, R_{X16}, and R_{X19} each preferably represent a hydrogen atom, a methyl group, a trifluoromethyl group, a carboxymethyl group, a hydroxymethyl group, or a methyloxymethyl group, and more preferably a hydrogen atom or a methyl group.

R_{X2}, R_{X3}, R_{X4}, R_{X5}, R_{X7}, R_{X8}, R_{X9}, R_{X10}, R_{X11}, R_{X12}, R_{X14}, R_{X15}, R_{X17}, R_{X18}, R_{X20}, and R_{X21} each preferably represent a hydrogen atom or a carboxyl group, and more preferably a hydrogen atom.

In General Formulae (1), and (1-1) to (1-7), L¹ represents a single bond or a divalent linking group. In the case where L¹ represents a divalent linking group, the divalent linking group is not particularly limited as long as the effect of the present invention can be obtained, but a substituted or unsubstituted linear, branched or cyclic alkylene group having 1 to 30 carbon atoms (for example, a methylene group, an ethylene group, a trimethylene group, a propylene group, or a butylene group), a substituted or unsubstituted arylene group having 6 to 30 carbon atoms (for example, a phenylene group or a naphthylene group), a substituted or unsubstituted heterocyclic linking group, -CH=CH-, -O-, -S-, -NR- (where R represents a hydrogen atom, an alkyl group, an aryl group, or a heterocyclic group), -C(=O)-, -SO-, -SO₂-, or a linking group formed by connecting two or more of these groups is preferably used. In particular, a linking group represented by any one of General Formulae (2) to (7) is preferably used.

In the case where L¹ represents a divalent linking group, the divalent linking group may have a substituent (for example, an alkyl group, an aryl group, a hydroxyl group, or an acyloxy group).

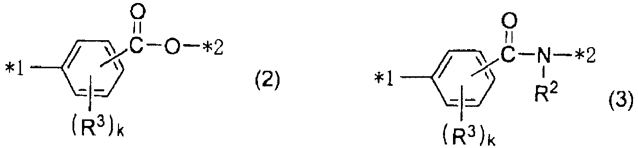

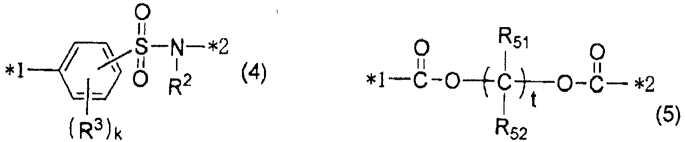

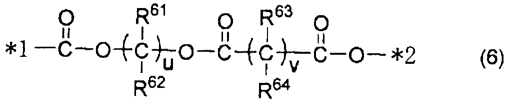

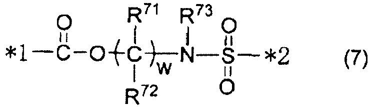

In General Formulae (2) to (7), one of *1 and *2 represents a position of being bonded to X¹ in General Formula (1) or the carbon atom or nitrogen atom of the polymer main chain in General Formulae (1-1) to (1-7), and the other of *1 and *2 represents a position of being bonded to D¹ in General Formulae (1) and (1-1) to (1-7), but it is preferred that *1 represents a position of being bonded to X¹ in General Formula (1) or the carbon atom or nitrogen atom of the polymer main chain in General Formulae (1-1) to (1-7), and *2 represents a position of being bonded to D¹ in General Formulae (1) and (1-1) to (1-7).

In General Formula (2), R³ represents a substituent. k represents an integer of 0 to 4. In the case where k is 2 or more, R³ may be the same or different.

In General Formula (3), R² represents a hydrogen atom, an alkyl group, an aryl group, or a heterocyclic group. R³ represents a substituent. k represents an integer of 0 to 4. In the case where k is 2 or more, R³ may be the same or different.

In General Formula (4), R² represents a hydrogen atom, an alkyl group, an aryl group, or a heterocyclic group. R³ represents a substituent. k represents an integer of 0 to 4. In the case where k is 2 or more, R³ may be the same or different.

In General Formula (5), R₅₁ and R₅₂ each independently represent a hydrogen atom or a substituent. t represents an integer of 1 to 10. (t) number of R₅₁'s and R₅₂'s may be the same or different from each other.

In General Formula (6), R⁶¹, R⁶², R⁶³, and R⁶⁴ each independently represent a hydrogen atom or a substituent. u and v each independently represent an integer of 1 to 10. (u) number of R⁶¹'s and R⁶²'s may be the same or different from each other. (v) number of R⁶³'s and R⁶⁴'s may be the same or different from each other.

In General Formula (7), R⁷¹, R⁷², and R⁷³ each independently represent a hydrogen atom or a substituent. w represents an integer of 1 to 10. (w) number of R⁷¹'s and R⁷²'s may be the same or different from each other.

In the case where R² in General Formula (3) represents an alkyl group, an aryl group, or a heterocyclic group, examples of the alkyl group, aryl group, or heterocyclic group include alkyl groups, aryl groups, or heterocyclic groups described in substituent group A which will be given later.

Examples of the substituent represented by R³ in General Formulae (2) to (4) include substituents selected from substituent group A which will be given later.

In the case where R₅₁ and R₅₂ in General Formula (5) represent a substituent, examples of the substituent include substituents selected from substituent group A which will be given later. It is preferred that R₅₁ and R₅₂ each independently represent a hydrogen atom or a hydroxyl group. t is preferably an integer of 1 to 5, and more preferably an integer of 1 to 3.

In the case where R⁶¹, R⁶², R⁶³, and R⁶⁴ in General Formula (6) represent a substituent, examples of the substituent include substituents selected from substituent group A which will be given later. R⁶¹, R⁶², R⁶³, and R⁶⁴ each independently preferably represent a hydrogen atom or a hydroxyl group, and more preferably a hydrogen atom u and v are each independently preferably an integer of 1 to 5, and more preferably an integer of 1 to 3.

In the case where R⁷¹, R⁷², and R⁷³ in General Formula (7) represent a substituent, examples of the substituent include substituents selected from substituent group A which will be given later. R⁷¹, R⁷², and R⁷³ each independently preferably represent a hydrogen atom or a hydroxyl group, more preferably a hydrogen atom. w is preferably an integer of 1 to 5, and more preferably an integer of 1 to 3.

In General Formulae (1), and (1-1) to (1-7), D¹ represents a dye residue obtained by removing one hydrogen atom from a dye. D¹ is not particularly limited as long as the effect of the present invention can be obtained, but D¹ more preferably represents a dye residue obtained by removing one hydrogen atom from a dye represented by any one of General Formulae (M1) to (M9), and particularly preferably a dye residue obtained by removing one hydrogen atom from a dye represented by any one of General Formulae (M1) to (M4). Incidentally, General Formulae (M2) and (M3) also include respective resonance structures.

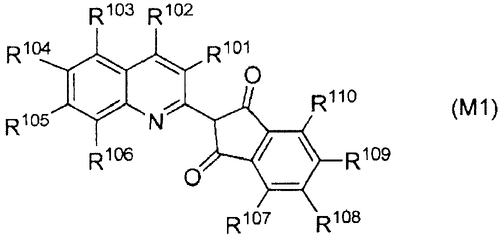

In General Formula (M1), R¹⁰¹ to R¹¹⁰ each independently represent a hydrogen atom or a substituent.

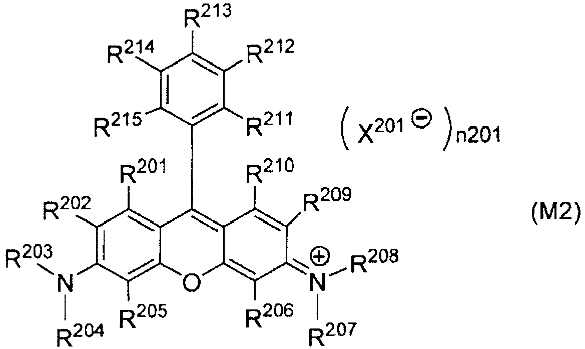

In General Formula (M2), R²⁰¹ to R²¹⁵ each independently represent a hydrogen atom or a substituent, X²⁰¹ represents a monovalent anion, and n201 represents 0 or 1.

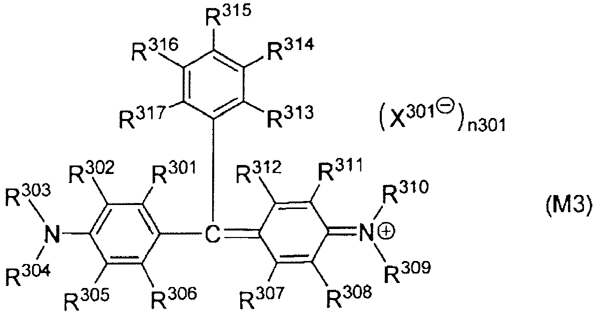

In General Formula (M3), R³⁰¹ to R³¹⁷ each independently represent a hydrogen atom or a substituent, X³⁰¹ represents a monovalent anion, and n301 represents 0 or 1.

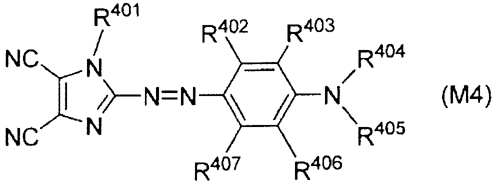

In General Formula (M4), R⁴⁰¹ to R⁴⁰⁷ each independently represent a hydrogen atom or a substituent.

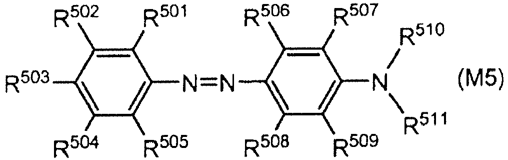

In General Formula (M5), R⁵⁰¹ to R⁵¹¹ each independently represent a hydrogen atom or a substituent.

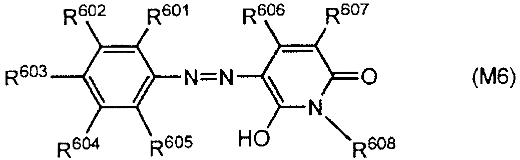

In General Formula (M6), R⁶⁰¹ to R⁶⁰⁸ each independently represent a hydrogen atom or a substituent.

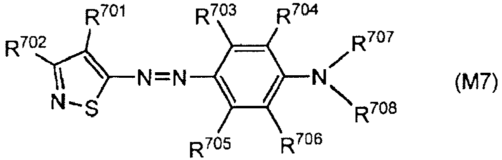

In General Formula (M7), R⁷⁰¹ to R⁷⁰⁸ each independently represent a hydrogen atom or a substituent.

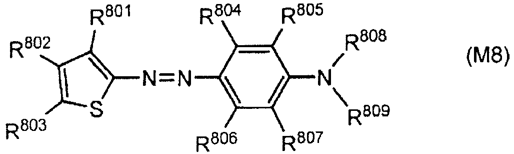

In General Formula (M8), R⁸⁰¹ to R⁸⁰⁹ each independently represent a hydrogen atom or a substituent.

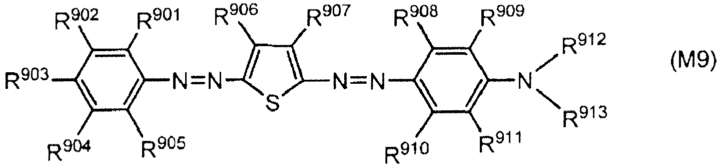

In General Formula (M9), R⁹⁰¹ to R⁹¹³ each independently represent a hydrogen atom or a substituent.

In the case where R¹⁰¹ to R¹¹⁰ in General Formula (M1), R²⁰¹ to R²¹⁵ in General Formula (M2), R³⁰¹ to R³¹⁷ in General Formula (M3), R⁴⁰¹ to R⁴⁰⁷ in General Formula (M4), R⁵⁰¹ to R⁵¹¹ in General Formula (M5), R⁶⁰¹ to R⁶⁰⁸ in General Formula (M6), R⁷⁰¹ to R⁷⁰⁸ in General Formula (M7), R⁸⁰¹ to R⁸⁰⁹ in General Formula (M8), and R⁹⁰¹ to R⁹¹³ in General Formula (M9) represent a substituent, examples of the substituent include substituents selected from substituent group A given below.

Substituents contained in substituent group A are shown below.

### (Substituent group A)

A halogen atom (for example, a fluorine atom, a chlorine atom, or a bromine atom), an alkyl group (preferably a linear, branched or cyclic alkyl group having 1 to 48 carbon atoms, and more preferably a linear, branched or cyclic alkyl group having 1 to 24 carbon atoms, for example, a methyl group, an ethyl group, a propyl group, an isopropyl group, a butyl group, a t-butyl group, a pentyl group, a hexyl group, a heptyl group, an octyl group, a 2-ethylhexyl group, a dodecyl group, a hexadecyl group, a cyclopropyl group, a cyclopentyl group, a cyclohexyl group, a 1-norbornyl group, or a 1-adamantyl group), an alkenyl group (preferably an alkenyl group having 2 to 48 carbon atoms, and more preferably an alkenyl group having 2 to 18 carbon atoms, for example, a vinyl group, an allyl group, or a 3-buten-1-yl group), an aryl group (preferably an aryl group having 6 to 48 carbon atoms, and more preferably an aryl group having 6 to 24 carbon atoms, for example, a phenyl group or a naphthyl group), a heterocyclic group (preferably a heterocyclic group having 1 to 32 carbon atoms, and more preferably a heterocyclic group having 1 to 18 carbon atoms, for example, a 2-thienyl group, a 4-pyridyl group, a 2-furyl group, a 2-pyrimidinyl group, a 1-pyridyl group, a 2-benzothiazolyl group, a 1 -imidazolyl group, a 1-pyrazolyl group, or a benzotriazol-1-yl group), a silyl group (preferably a silyl group having 3 to 38 carbon atoms, and more preferably a silyl group having 3 to 18 carbon atoms, for example, a trimethylsilyl group, a triethylsilyl group, a tributylsilyl group, a t-butyldimethylsilyl group, or a t-hexyldimethylsilyl group), a hydroxyl group, a cyano group, a nitro group, an alkoxy group (preferably a linear, branched or cyclic alkoxy group having 1 to 48 carbon atoms, and more preferably a linear, branched or cyclic alkoxy group having 1 to 24 carbon atoms, for example, a methoxy group, an ethoxy group, a 1 -butoxy group, a 2-butoxy group, an isopropoxy group, a t-butoxy group, a dodecyloxy group, a cyclopentyloxy group, or a cyclohexyloxy group), an aryloxy group (preferably an aryloxy group having 6 to 48 carbon atoms, and more preferably an aryloxy group having 6 to 24 carbon atoms, for example, a phenoxy group or a 1-naphthoxy group), a heterocyclic oxy group (preferably a heterocyclic oxy group having 1 to 32 carbon atoms, and more preferably a heterocyclic oxy group having 1 to 18 carbon atoms, for example, a 1-phenyltetrazole-5-oxy group or a 2-tetrahydropyranyloxy group), a silyloxy group (preferably a silyloxy group having 1 to 32 carbon atoms, and more preferably a silyloxy group having 1 to 18 carbon atoms, for example, a trimethylsilyloxy group, a t-butyldimethylsilyloxy group, or a diphenylmethylsilyloxy group), an acyloxy group (preferably an acyloxy group having 2 to 48 carbon atoms and more preferably an acyloxy group having 2 to 24 carbon atoms, for example, an acetoxy group, a pivaloyloxy group, a benzoyloxy group, or a dodecanoyloxy group), an alkoxycarbonyloxy group (preferably a linear, branched or cyclic alkoxycarbonyloxy group having 2 to 48 carbon atoms, and more preferably a linear, branched or cyclic alkoxycarbonyloxy group having 2 to 24 carbon atoms, for example, an ethoxycarbonyloxy group, a t-butoxycarbonyloxy group, or a cyclohexyloxycarbonyloxy group), an aryloxycarbonyloxy group (preferably an aryloxycarbonyloxy group having 7 to 32 carbon atoms, and more preferably an aryloxycarbonyloxy group having 7 to 24 carbon atoms, for example, a phenoxycarbonyloxy group), a carbamoyloxy group (preferably a carbamoyloxy group having 1 to 48 carbon atoms, and more preferably a carbamoyloxy group having 1 to 24 carbon atoms, for example, an N,N-dimethylcarbamoyloxy group, an N-butylcarbamoyloxy group, an N-phenylcarbamoyloxy group, or an N-ethyl-N-phenylcarbamoyloxy group), a sulfamoyloxy group (preferably a sulfamoyloxy group having 1 to 32 carbon atoms, and more preferably a sulfamoyloxy group having 1 to 24 carbon atoms, for example, an N,N-diethylsulfamoyloxy group or an N-propylsulfamoyloxy group), an alkylsulfonyloxy group (preferably an alkylsulfonyloxy group having 1 to 38 carbon atoms, and more preferably an alkylsulfonyloxy group having 1 to 24 carbon atoms, for example, a methylsulfonyloxy group, a hexadecylsulfonyloxy group, or a cyclohexylsulfonyloxy group), an arylsulfonyloxy group (preferably an arylsulfonyloxy group having 6 to 32 carbon atoms, and more preferably an arylsulfonyloxy group having 6 to 24 carbon atoms, for example, a phenylsulfonyloxy group), an acyl group (preferably a linear, branched or cyclic acyl group having 1 to 48 carbon atoms, and more preferably a linear, branched or cyclic acyl group having 1 to 24 carbon atoms, for example, a formyl group, an acetyl group, a pivaloyl group, a benzoyl group, a tetradecanoyl group, or a cyclohexanoyl group), an alkoxycarbonyl group (preferably a linear, branched or cyclic alkoxycarbonyl group having 2 to 48 carbon atoms, and more preferably a linear, branched or cyclic alkoxycarbonyl group having 2 to 24 carbon atoms, for example, a methoxycarbonyl group, an ethoxycarbonyl group, an octadecyloxycarbonyl group, a cyclohexyloxycarbonyl group, or a 2,6-di-tert-butyl-4-methylcyclohexyloxycarbonyl group), an aryloxycarbonyl group (preferably an aryloxycarbonyl group having 7 to 32 carbon atoms, and more preferably an aryloxycarbonyl group having 7 to 24 carbon atoms, for example, a phenoxycarbonyl group), a carbamoyl group (preferably a carbamoyl group having 1 to 48 carbon atoms, and more preferably a carbamoyl group having 1 to 24 carbon atoms, for example, a carbamoyl group, an N,N-diethylcarbamoyl group, an N-ethyl-N-octylcarbamoyl group, an N,N-dibutylcarbamoyl group, an N-propylcarbamoyl group, an N-phenylcarbamoyl group, an N-methyl N-phenylcarbamoyl group, or an N,N-dicyclohexylcarbamoyl group), an amino group (preferably an amino group having 32 or less carbon atoms, and more preferably an amino group having 24 or less carbon atoms, for example, an amino group, a methylamino group, an N,N-dibutylamino group, a tetradecylamino group, a 2-ethylhexylamino group, or a cyclohexylamino group), an anilino group (preferably an anilino group having 6 to 32 carbon atoms, and more preferably an anilino group having 6 to 24 carbon atoms, for example, an anilino group or an N-methylanilino group), a heterocyclic amino group (preferably a heterocyclic amino group having 1 to 32 carbon atoms, and more preferably a heterocyclic amino group having 1 to 18 carbon atoms, for example, a 4-pyridylamino group), a carbonamido group (preferably a carbonamido group having 2 to 48 carbon atoms, and more preferably a carbonamido group having 2 to 24 carbon atoms, for example, an acetamido group, a benzamide group, a tetradecanamide group, a pivaloylamide group, or a cyclohexanamide group), a ureido group (preferably a ureido group having 1 to 32 carbon atoms, and more preferably a ureido group having 1 to 24 carbon atoms, for example, a ureido group, an N,N-dimethylureido group, or an N-phenylureido group), an imido group (preferably an imido group having 36 or less carbon atoms, and more preferably an imide group having 24 or less carbon atoms, for example, an N-succinimido group or an N-phthalimido group), an alkoxycarbonylamino group (preferably a linear, branched or cyclic alkoxycarbonylamino group having 2 to 48 carbon atoms, and more preferably a linear, branched or cyclic alkoxycarbonylamino group having 2 to 24 carbon atoms, for example, a methoxycarbonylamino group, an ethoxycarbonylamino group, a t-butoxycarbonylamino group, an octadecyloxycarbonylamino group, or a cyclohexyloxycarbonylamino group), an aryloxycarbonylamino group (preferably an aryloxycarbonylamino group having 7 to 32 carbon atoms, and more preferably an aryloxycarbonylamino group having 7 to 24 carbon atoms, for example, a phenoxycarbonylamino group), a sulfonamido group (preferably a sulfonamido group having 1 to 48 carbon atoms, and more preferably a sulfonamido group having 1 to 24 carbon atoms, for example, a methanesulfonamido group, a butanesulfonamido group, a benzenesulfonamido group, a hexadecanesulfonamido group, or a cyclohexanesulfonamido group), a sulfamoylamino group (preferably a sulfamoylamino group having 1 to 48 carbon atoms, and more preferably a sulfamoylamino group having 1 to 24 carbon atoms, for example, an N-dipropylsulfamoylamino group or an N-ethyl-N-dodecylsulfamoylamino group), an azo group (preferably an azo group having 1 to 32 carbon atoms, and more preferably an azo group having 1 to 24 carbon atoms, for example, a phenylazo group or a 3-pyrazolylazo group), an alkylthio group (preferably a linear, branched or cyclic alkylthio group having 1 to 48 carbon atoms, and more preferably a linear, branched or cyclic alkylthio group having 1 to 24 carbon atoms, for example, a methylthio group, an ethylthio group, an octylthio group, or a cyclohexylthio group), an arylthio group (preferably an arylthio group having 6 to 48 carbon atoms, and more preferably an arylthio group having 6 to 24 carbon atoms, for example, a phenylthio group), a heterocyclic thio group (preferably a heterocyclic thio group having 1 to 32 carbon atoms, and more preferably a heterocyclic thio group having 1 to 18 carbon atoms, for example, a 2-benzothiazolylthio group, a 2-pyridylthio group, or a 1-phenyltetrazolylthio group), an alkylsulfinyl group (preferably a linear, branched or cyclic alkylsulfinyl group having 1 to 32 carbon atoms, and more preferably a linear, branched or cyclic alkylsulfinyl group having 1 to 24 carbon atoms, for example, a dodecanesulfinyl group), an arylsulfinyl group (preferably an arylsulfinyl group having 6 to 32 carbon atoms, and more preferably an arylsulfinyl group having 6 to 24 carbon atoms, for example, a phenylsulfinyl group), an alkylsulfonyl group (preferably a linear, branched or cyclic alkylsulfonyl group having 1 to 48 carbon atoms, and more preferably a linear, branched or cyclic alkylsulfonyl group having 1 to 24 carbon atoms, for example, a methylsulfonyl group, an ethylsulfonyl group, a propylsulfonyl group, a butylsulfonyl group, an isopropylsulfonyl group, a 2-ethylhexylsulfonyl group, a hexadecylsulfonyl group, an octylsulfonyl group, or a cyclohexylsulfonyl group), an arylsulfonyl group (preferably an arylsulfonyl group having 6 to 48 carbon atoms, and more preferably an arylsulfonyl group having 6 to 24 carbon atoms, for example, a phenylsulfonyl group or a 1-naphthylsulfonyl group), a sulfamoyl group (preferably a sulfamoyl group having 32 or less carbon atoms, and more preferably a sulfamoyl group having 24 or less carbon atoms, for example, a sulfamoyl group, an N,N-dipropylsulfamoyl group, an N-ethyl-N-dodecylsulfamoyl group, an N-ethyl-N-phenylsulfamoyl group, or an N-cyclohexylsulfamoyl group), a sulfo group, a carboxyl group, a phosphate group, a phosphonyl group (preferably a phosphonyl group having 1 to 32 carbon atoms, and more preferably a phosphonyl group having 1 to 24 carbon atoms, for example, a phenoxyphosphonyl group, an octyloxyphosphonyl group, or phenylphosphonyl group), and a phosphinoylamino group (preferably a phosphinoylamino group having 1 to 32 carbon atoms, and more preferably a phosphinoylamino group having 1 to 24 carbon atoms, for example, a diethoxyphosphinoylamino group or a dioctyloxyphosphinoylamino group).

An ionic group such as a sulfo group, a carboxyl group, or a phosphate group may be in a state containing a cation or an anion (also referred to as "salt state"). For example, the carboxyl group, the phosphate group, and the sulfo group may be in a state containing a cation, examples of the cation forming a salt state include an ammonium ion, an alkali metal ion (for example, a lithium ion, a sodium ion, or a potassium ion), and an organic cation (for example, a tetramethylammonium ion, a tetramethylguanidinium ion, or tetramethylphosphonium ion).

In the case where R¹⁰¹ to R¹¹⁰ in General Formulae (M1), R²⁰¹ to R²¹⁵ in General Formula (M2), R³⁰¹ to R³¹⁷ in General Formula (M3), R⁴⁰¹ to R⁴⁰⁷ in General Formula (M4), R⁵⁰¹ to R⁵¹¹ in General Formula (M5), R⁶⁰¹ to R⁶⁰⁸ in General Formula (M6), R⁷⁰¹ to R⁷⁰⁸ in General Formula (M7), R⁸⁰¹ to R⁸⁰⁹ in General Formula (M8), and R⁹⁰¹ to R⁹¹³ in General Formula (M9) represent a substituent, and in the case where the substituent is a further substitutable group, the substituent may further have a substituent, and examples of the substituent include substituents selected from the foregoing substituent group A. In the case of having two or more substituents, these substituents maybe the same or different. In addition, in the case where R¹⁰¹ to R¹¹⁰ in General Formula (M1), R²⁰¹ to R²¹⁵ in General Formula (M2), R³⁰¹ to R³¹⁷ in General Formula (M3), and R⁴⁰¹ to R⁴⁰⁷ in General Formula (M4) represent a substituent, at least two of the substituents may be bonded to each other to form a 5-, 6- or 7-membered saturated ring or unsaturated ring. In the case where the formed 5-, 6-, and 7-membered rings are further substitutable groups, they may further have a substituent, and examples of the substituent include substituents selected from the foregoing substituent group A. In the case of being substituted with two or more substituents, the substituents may be the same or different.
R¹⁰¹ in General Formula (M1) is preferably a hydrogen atom or a hydroxyl group and more preferably a hydroxyl group.
R¹⁰² in General Formula (M1) is preferably a hydrogen atom, a halogen atom, a carboxyl group, or an alkoxycarbonyl group having 2 to 20 carbon atoms, more preferably a hydrogen atom, a halogen atom, or a carboxyl group, and particularly preferably a hydrogen atom, a bromine atom, or a carboxyl group.
R¹⁰⁴ in General Formula (M1) is preferably a hydrogen atom or a substituted or unsubstituted alkyl group having 1 to 20 carbon atoms, more preferably a hydrogen atom, a substituted or unsubstituted alkyl group having 1 to 12 carbon atoms, and particularly preferably an unsubstituted alkyl group having 1 to 8 carbon atoms.
R¹⁰⁸ in General Formula (M1) preferably represents a hydrogen atom, a halogen atom, a substituted or unsubstituted alkyl group having 1 to 20 carbon atoms, a carboxyl group, a substituted or unsubstituted alkoxycarbonyl group having 2 to 20 carbon atoms, or a substituted or unsubstituted carbamoyl group.
R¹⁰³, R¹⁰⁵, and R¹⁰⁶ in General Formula (M1) are preferably each independently a hydrogen atom, a substituted or unsubstituted alkyl group having 1 to 20 carbon atoms, or a substituted or unsubstituted aryl group having 6 to 10 carbon atoms, or a halogen atom, more preferably a hydrogen atom or a substituted or unsubstituted alkyl group having 1 to 12 carbon atoms, and particularly preferably a hydrogen atom.
R¹⁰⁷, R¹⁰⁹, and R¹¹⁰ in General Formula (M1) are preferably each independently a hydrogen atom, a substituted or unsubstituted alkyl group having 1 to 20 carbon atoms, a substituted or unsubstituted aryl group having 6 to 10 carbon atoms, a halogen atom, a carboxyl group, a substituted or unsubstituted alkoxycarbonyl group having 2 to 20 carbon atoms, or a substituted or unsubstituted carbamoyl group, and more preferably a hydrogen atom or a halogen atom, and particularly preferably a hydrogen atom, a chlorine atom, or a bromine atom.
R²⁰¹, R²⁰⁵, R²⁰⁶, and R²¹⁰ in General Formula (M2) are preferably each independently a hydrogen atom, a halogen atom, or a hydroxyl group, and more preferably a hydrogen atom.
R²⁰² and R²⁰⁹ in General Formula (M2) are preferably each independently a hydrogen atom, a halogen atom, a hydroxyl group, or a sulfo group, more preferably a hydrogen atom or a sulfo group, and particularly preferably a hydrogen atom.
R²⁰³, R²⁰⁴, R²⁰⁷, and R²⁰⁸ in General Formula (M2) are preferably each independently a hydrogen atom, a substituted or unsubstituted alkyl group having 1 to 20 carbon atoms, a substituted or unsubstituted aryl group having 6 to 18 carbon atoms, more preferably a hydrogen atom, a substituted or unsubstituted alkyl group having 1 to 18 carbon atoms, or a substituted or unsubstituted aryl group having 6 to 10 carbon atoms, and particularly preferably a hydrogen atom, a substituted or unsubstituted alkyl group having 2 to 12 carbon atoms, or a substituted or unsubstituted aryl group having 6 to 10 carbon atoms.
R²¹¹ in General Formula (M2) is preferably a carboxylate group, a sulfonate group, a substituted or unsubstituted alkoxycarbonyl group, a substituted or unsubstituted carbamoyl group, or a substituted or unsubstituted sulfamoyl group, more preferably a sulfonate group, a substituted or unsubstituted alkoxycarbonyl group, a substituted or unsubstituted carbamoyl group, or a substituted or unsubstituted sulfamoyl group, and particularly preferably a sulfonate group or an alkoxycarbonyl group.
R²¹², R²¹³, R²¹⁴, and R²¹⁵ in General Formula (M2) are preferably each independently a hydrogen atom, a halogen atom, a substituted or unsubstituted alkyl group, a substituted or unsubstituted aryl group, a carboxyl group, a substituted or unsubstituted alkoxycarbonyl group, a substituted or unsubstituted carbamoyl group, a sulfo group, a substituted or unsubstituted sulfamoyl group, or a substituted or unsubstituted amino group, more preferably each independently a hydrogen atom, a halogen atom, a carboxyl group, a substituted or unsubstituted alkoxycarbonyl group, a substituted or unsubstituted carbamoyl group, a sulfo group, a substituted or unsubstituted sulfamoyl group, or a substituted or unsubstituted amino group, and particularly preferably each independently a hydrogen atom, a substituted or unsubstituted alkoxycarbonyl group, a substituted or unsubstituted carbamoyl group, a sulfo group, a substituted or unsubstituted sulfamoyl group, or a substituted or unsubstituted amino group.
R²¹⁴ and R²¹⁵ in General Formula (M2) are also preferably bonded to each other to form a ring.
X²⁰¹ in General Formula (M2) is preferably a chlorine ion, an acetate ion, a triflate ion, a tetrafluoroborate ion, a tetrakis(pentafluorophenyl)borate ion, a perchlorate, or a bis(trifluoromethanesulfonyl)imide anion, and more preferably a tetrakis(pentafluorophenyl)borate ion or a bis(trifluoromethanesulfonyl)imide anion.
n201 in General Formula (M2) is preferably 0 or 1 and more preferably 0.
R³⁰¹, R³⁰², R³⁰⁵, R³⁰⁶, R³⁰⁷, R³⁰⁸, R³¹¹, and R³¹² in General Formula (M3) are preferably each independently a hydrogen atom, a substituted or unsubstituted alkyl group having 1 to 20 carbon atoms, a substituted or unsubstituted aryl group having 6 to 20 carbon atoms, a halogen atom, or a hydroxyl group, more preferably a hydrogen atom, a halogen atom, or a hydroxyl group, and particularly preferably a hydrogen atom.
R³⁰³, R³⁰⁴, R³⁰⁹, and R³¹⁰ in General Formula (M3) are preferably each independently a hydrogen atom, a substituted or unsubstituted alkyl group having 1 to 20 carbon atoms, or a substituted or unsubstituted aryl group having 6 to 20 carbon atoms, more preferably a hydrogen atom, a substituted or unsubstituted alkyl group having 1 to 18 carbon atoms, or a substituted or unsubstituted aryl group having 6 to 20 carbon atoms, and particularly preferably a hydrogen atom, an alkyl group having 1 to 12 carbon atoms, or an aryl group having 6 to 10 carbon atoms.
R³¹³ in General Formula (M3) is preferably a carboxylate group (-CO₂-), a sulfonate group (-SO₃-), a substituted or unsubstituted alkoxycarbonyl group, a substituted or unsubstituted carbamoyl group, a substituted or unsubstituted sulfamoyl group, more preferably a sulfonate group, a substituted or unsubstituted alkoxycarbonyl group, a substituted or unsubstituted carbamoyl group, or a substituted or unsubstituted sulfamoyl group, and particularly preferably a sulfonate group or an alkoxycarbonyl group.
R³¹⁴ in General Formula (M3) is preferably a hydrogen atom, a halogen atom, a hydroxyl group, a sulfo group, a carboxyl group, or a substituted or unsubstituted alkyl group having 1 to 20 carbon atoms, more preferably a hydrogen atom, a halogen atom, or a hydroxyl group, and particularly preferably a hydrogen atom.
R³¹⁵ in General Formula (M3) is preferably a hydrogen atom, a substituted or unsubstituted amino group, a carboxyl group, a substituted or unsubstituted alkoxycarbonyl group, a substituted or unsubstituted carbamoyl group, a sulfo group, a substituted or unsubstituted sulfamoyl group, or a hydroxyl group, more preferably a hydrogen atom, a substituted or unsubstituted amino group, a substituted or unsubstituted alkoxycarbonyl group, a substituted or unsubstituted carbamoyl group, or a substituted or unsubstituted sulfamoyl group, and particularly preferably a substituted or unsubstituted amino group or a substituted or unsubstituted sulfamoyl group.
R³¹⁶ and R³¹⁷ in General Formula (M3) are preferably each independently a hydrogen atom, a substituted or unsubstituted alkyl group having 1 to 20 carbon atoms, a substituted or unsubstituted aryl group having 6 to 20 carbon atoms, a hydroxyl group, or a halogen atom, more preferably a hydrogen atom, a halogen atom, or a hydroxyl group, and particularly preferably a hydrogen atom.
R³¹⁶ and R³¹⁷ in General Formula (M3) are also preferably bonded to each other to form a ring.
X³⁰¹ in General Formula (M3) is preferably a chlorine ion, an acetate ion, a triflate ion, a tetrafluoroborate ion, a tetrakis(pentafluorophenyl)borate ion, a perchlorate ion, or a bis(trifluoromethanesulfonyl)imide anion, and more preferably a tetrakis(pentafluorophenyl)borate ion or a bis(trifluoromethanesulfonyl)imide anion.
n301 in General Formula (M3) is preferably 0 or 1 and more preferably 0.
R⁴⁰¹ in General Formula (M4) is preferably a hydrogen atom, a substituted or unsubstituted alkyl group having 1 to 20 carbon atoms, a substituted or unsubstituted aryl group having 6 to 20 carbon atoms, or a substituted or unsubstituted acyl group, more preferably a substituted or unsubstituted alkyl group having 1 to 18 carbon atoms, and particularly preferably a substituted or unsubstituted alkyl group having 1 to 16 carbon atoms.
R⁴⁰² in General Formula (M4) is preferably a hydrogen atom or a substituted or unsubstituted amino group, more preferably a substituted or unsubstituted amino group, and particularly preferably a substituted or unsubstituted acylamino group.
R⁴⁰³, R⁴⁰⁶, and R⁴⁰⁷ in General Formula (M4) are preferably each independently a hydrogen atom, a substituted or unsubstituted alkyl group having 1 to 20 carbon atoms, a hydroxyl group, a substituted or unsubstituted alkoxy group having 1 to 20 carbon atoms, or a halogen atom, more preferably a hydrogen atom or a substituted or unsubstituted alkoxy group having 1 to 20 carbon atoms, and particularly preferably a hydrogen atom.
R⁴⁰⁴ and R⁴⁰⁵ in General Formula (M4) are preferably a hydrogen atom, a substituted or unsubstituted alkyl group having 1 to 20 carbon atoms, or a substituted or unsubstituted aryl group having 6 to 20 carbon atoms, more preferably a substituted or unsubstituted alkyl group having 1 to 20 carbon atoms, and particularly preferably a substituted or unsubstituted alkyl group having 1 to 8 carbon atoms.
R⁵⁰¹, R⁵⁰², R⁵⁰³, R⁵⁰⁴, R⁵⁰⁵, R⁵⁰⁶, R⁵⁰⁷, R⁵⁰⁸, and R⁵⁰⁹ in General Formula (M5), R⁶⁰¹, R⁶⁰², R⁶⁰³, R⁶⁰⁴, R⁶⁰⁵, R⁶⁰⁶, R⁶⁰⁷, and R⁶⁰⁸ in General Formula (M6), R⁷⁰¹, R⁷⁰², R⁷⁰³, R⁷⁰⁴, R⁷⁰⁵, and R⁷⁰⁶ in General Formula (M7), R⁸⁰¹, R⁸⁰², R⁸⁰³, R⁸⁰⁴, R⁸⁰⁵, R⁸⁰⁶, and R⁸⁰⁷ in General Formula (M8), and R⁹⁰¹, R⁹⁰², R⁹⁰³, R⁹⁰⁴, R⁹⁰⁵, R⁹⁰⁶, R⁹⁰⁷, R⁹⁰⁸, R⁹⁰⁹, R⁹¹⁰, and R⁹¹¹ in General Formula (M9) are preferably a hydrogen atom, a halogen atom, a nitro group, a substituted or unsubstituted alkyl group having 1 to 20 carbon atoms, a substituted or unsubstituted aryl group having 6 to 20 carbon atoms, a heterocyclic group, a substituted or unsubstituted alkoxy group having 1 to 20 carbon atoms, a substituted or unsubstituted acyl group, a substituted or unsubstituted amino group, a cyano group, a substituted or unsubstituted sulfamoyl group, a carboxyl group, or a hydroxy group, and more preferably a hydrogen atom, a halogen atom, a nitro group, a cyano group, an alkyl group, an alkoxy group, an alkoxyacyl group, a sulfamoyl group, or an acylamino group.
R⁵¹⁰ and R⁵¹¹ in General Formula (M5), R⁷⁰⁷ and R⁷⁰⁸ in General Formula (M7), R⁸⁰⁸ and R⁸⁰⁹ in General Formula (M8), and R⁹¹² and R⁹¹³ in General Formula (M9) are preferably a hydrogen atom, a substituted or unsubstituted alkyl group having 1 to 20 carbon atoms, or a substituted or unsubstituted aryl group having 6 to 20 carbon atoms, and more preferably an alkyl group having 1 to 8 carbon atoms.

Specific examples of the dyes represented by General Formulae (M1) to (M9) are shown below. Me represents a methyl group, Et represents an ethyl group, i-Pr represents an isopropyl group, and Bu represents an n-butyl group.

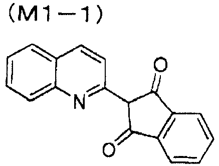

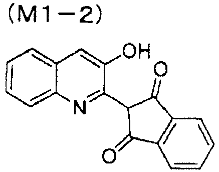

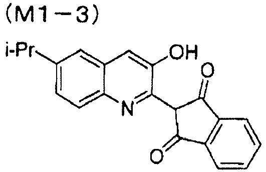

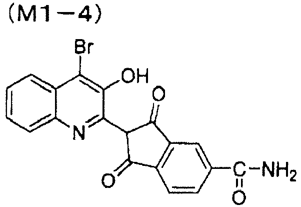

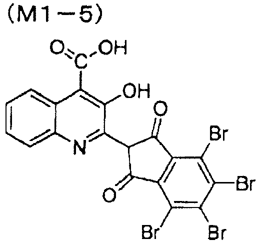

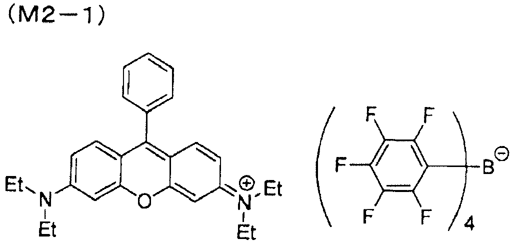

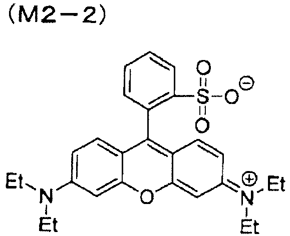

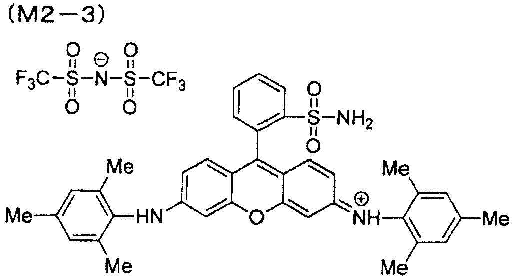

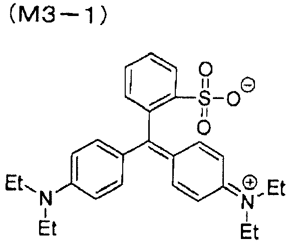

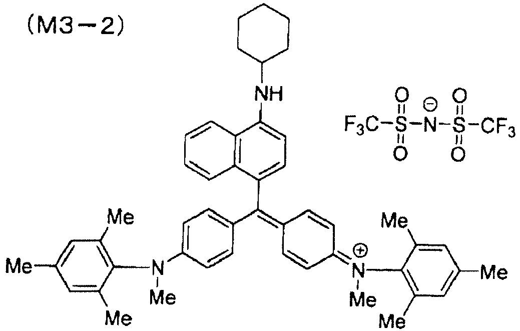

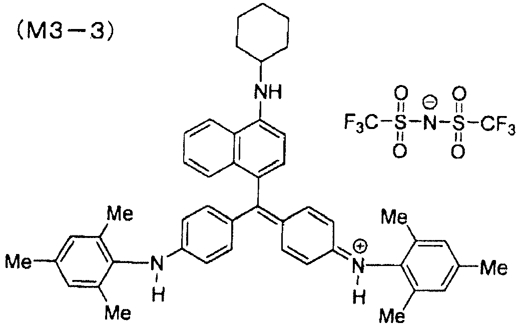

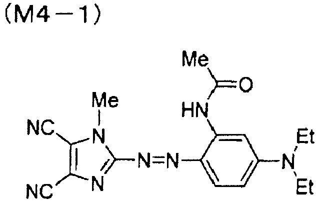

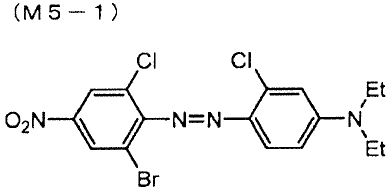

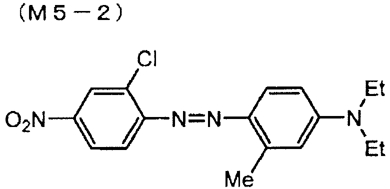

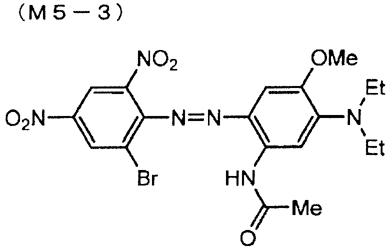

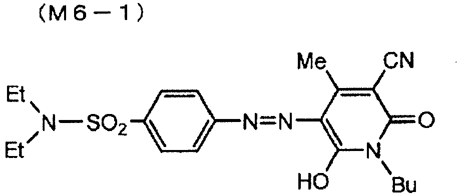

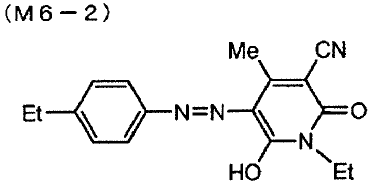

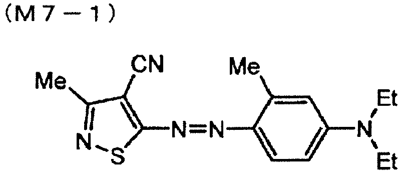

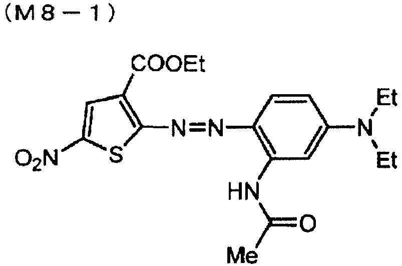

Some of the dyes represented by General Formulae (M1) to (M9) are classified by color index and can be synthesized by a conventionally known method (see, for example, JP1995-49583B (JP-07-49583B), Japanese Patent No. 5715380, WO2010/110199A, JP2002-509957A, or the like). The synthesis method is specifically exemplified in the Examples.

### [Repeating unit represented by General Formula (10)]

Next, the repeating unit represented by General Formula (10) will be described.

(̵X²-D²-X³)̵ (10)

In General Formula (10), X² and X³ each independently represent a linking group, and D² represents a dye residue obtained by removing two hydrogen atoms from a dye.

In General Formula (10), X² and X³ each represent a linking group. X² and X³ are preferably a linking group formed by polymerization, which is preferably a moiety corresponding to the main chain formed by a polymerization reaction. X² and X³ are preferably an alkylene group (a linear, branched or cyclic alkylene group), an arylene group, a heterocyclic group, -CH=CH-, -O-, -S-, -NR- (where R represents a hydrogen atom, an alkyl group, an aryl group, or a heterocyclic group), -C(=O)-, -SO-, -SO₂-, or a group formed by combining two or more of these groups. In addition, these groups may have a substituent, and examples of the substituent include substituents selected from the foregoing substituent group A.

In General Formula (10), D² represents a dye residue obtained by removing two hydrogen atoms from a dye. D² is not particularly limited as long as the effect of the present invention can be obtained, but it more preferably represents a dye residue obtained by removing two hydrogen atoms from a dye represented by any one of General Formulae (M1) to (M9), and particularly preferably represents a dye residue obtained by removing two hydrogen atoms from a dye represented by any one of General Formulae (M1) to (M4).

The repeating unit represented by General Formula (10) is preferably a repeating unit represented by General Formula (10-1) or (10-2).

A dye polymer including the repeating unit represented by General Formula (10-1) is a polyurethane, and a dye polymer including the repeating unit represented by General Formula (10-2) is a polyurea.

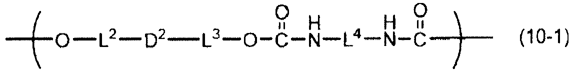

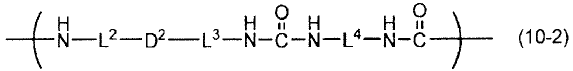

In General Formula (10-1) or General Formula (10-2), L² and L³ each independently represent a single bond or a linking group, L⁴ represents a linking group, and D² represents a dye residue obtained by removing two hydrogen atoms from a dye.

D² in General Formula (10-1) or General Formula (10-2) is the same as D² in General Formula (10).

In General Formula (10-1) or General Formula (10-2), the linking group in the case where L², L³, and L⁴ represent a linking group is not limited at all as long as the effect of the present invention can be obtained, but it is preferably a substituted or unsubstituted linear, branched or cyclic alkylene group having 1 to 30 carbon atoms (for example, a methylene group, an ethylene group, a trimethylene group, a propylene group, or a butylene group), a substituted or unsubstituted arylene group having 6 to 30 carbon atoms (for example, a phenylene group or a naphthylene group), a substituted or unsubstituted heterocyclic group, -CH=CH-, or a linking group formed by connecting two or more of these groups. These linking groups may have - O-, -S-, -NR- (where R represents a hydrogen atom, an alkyl group, an aryl group, or a heterocyclic group), -C(=O)-, -SO-, -SO₂-, or the like therein.

L² and L³ are preferably a single bond or a divalent linking group. In the case where L² and L³ are a divalent linking group, it is preferably an alkylene group or a linking group formed by combining an alkylene group with -O-. The alkylene group is preferably an alkylene group having 1 to 10 carbon atoms and more preferably an alkylene group having 1 to 6 carbon atoms.

L⁴ is preferably a divalent linking group, more preferably an alkylene group, an arylene group, or a linking group formed by combining an alkylene group and an arylene group, and still more preferably an alkylene group having 1 to 20 carbon atoms.

### (Molecular weight of dye polymer)

In the present invention, since the dye polymer is used in a state of being dispersed in water, there is an optimum molecular weight range for the dye polymer with respect to dispersibility, and in the case where it is less than or equal to the upper limit of the optimum molecular weight range, reaggregation of the dispersion hardly occurs. On the other hand, in the case where it is higher than or equal to the lower limit of the optimum molecular weight range, it is difficult to dissolve the dye polymer in water and an aqueous organic solvent. Although it varies depending on the type of dye polymer used, the weight-average molecular weight of the dye polymer is preferably 3,000 to 2,000,000, more preferably 3,000 to 1,000,000, and particularly preferably 3,000 to 200,000.

The weight-average molecular weight of the dye polymer can be calculated from gel permeation chromatography (GPC) measurement. In the present specification, unless otherwise specified, the GPC measurement is carried out using HLC-8220 GPC (manufactured by Tosoh Corporation) with TSKgel SuperHZM-H, TSKgel SuperHZ4000, and TSKgel SuperHZ200 (manufactured by Tosoh Corporation) as columns, and the number-average molecular weight is calculated by polystyrene conversion. The carrier may be appropriately selected, but as long as it is soluble, N-methylpyrrolidone (NMP) is used.

### (Ionicity of dye polymer)

Since the dye polymer in the present invention is used in a state of being dispersed in water, it is preferred that the dye polymer itself has charge repulsion. In the case where the dye polymer itself has charge repulsion, it is excellent in terms of dispersion stability necessary for inkjet ejectability. In the case where the dye polymer has charge repulsion, the dye polymer has an anionic or cationic ionic group. Examples of the anionic group include a carboxyl group, a sulfo group, a phosphate group, and salts thereof. The cationic group is preferably an ammonium group. In terms of inkjet suitability, the ionic group of the dye polymer is preferably an anionic group, and most preferably a carboxyl group. Examples of the salt include Li salt, Na salt, K salt and ammonium salt.

On the other hand, in the case where the ionic group of the dye polymer is too large, the dye polymer dissolves in water, making it difficult to obtain an aqueous dispersion of the dye polymer. Also, from the viewpoint of the water resistance (such as discoloration upon washing) of the colored fabric to be obtained, there is an optimum range for the amount of ionic groups of the dye polymer. The amount of ionic groups (ionic group amount) of the dye polymer is preferably 0.1 to 1.8 mmol/g and more preferably 0.2 to 1.3 mmol/g.

### (Melting and glass transition point (Tg) of dye polymer)

In the inkjet printing method of the present invention, it is preferable to carry out a heat treatment after printing an aqueous dispersion of the dye polymer. In the heat treatment step, since the dye polymer is melt-dyed, it is preferred that the dye polymer is melted at or below the heat treatment temperature. Since it is preferred that the heat treatment step is usually carried out at 100°C to 200°C, the dye polymer is preferably melted at 200°C or lower and more preferably at 180°C or lower.

Whether the dye polymer melts at a specific temperature can be confirmed by raising the temperature of the dye polymer at 10°C/min to a specific temperature with a melting point meter and visually checking the state of the dye polymer.

The Tg of the dye polymer is preferably 200°C or lower, more preferably 180°C or lower, and still more preferably 150°C or lower.

The Tg of the dye polymer can be measured by differential scanning calorimetry (DSC).

### (Structure of dye polymer)

It is sufficient that the dye polymer has a repeating unit containing a structure derived from a dye as an essential structure, but from the viewpoint of dispersibility in water, a repeating unit containing at least one of a hydrophobic group (an electrically neutral nonpolar group with low affinity for water) or an ionic group (an electrically ionic polar group with high affinity for water) is more preferably introduced. The molecular structure of the dye polymer may be either linear or branched. The molecular structure of the dye polymer may be any of random, alternating, periodic, or blocked structure, and it may be a graft polymer in which the structures of the trunk and branch are designed.

As a method of forming the dye polymer, a method such as so-called copolymerization is preferred from the viewpoint of design freedom. Examples of copolymerization components include a hydrophobic group-containing monomer, an anionic group-containing monomer, a cationic group-containing monomer, and other functional monomers, which will be described below.

The content of the repeating unit having a structure derived from a dye in the dye polymer with respect to all the repeating units is preferably 10% to 90% by mass, more preferably 25% to 90% by mass, and particularly preferably 50% to 80% by mass. In the case where the content of the repeating unit having a structure derived from a dye is 10% by mass or more, the coloring power per unit mass improves and therefore the dyeing density to the fabric increases. On the other hand, in the case where the content of the repeating unit having a structure derived from a dye is 90% by mass or less, the molecular weight can be easily adjusted to an appropriate range during synthesis of the dye polymer.

### [Hydrophobic group-containing monomer]

Examples of the hydrophobic group-containing monomer include vinyl monomers such as styrene-based monomers, phenyl group-containing (meth)acrylates, alkyl (meth)acrylates, alkyl vinyl ethers, and (meth)acrylonitriles; urethane group-containing vinyl monomers formed from a polyisocyanate and a polyol or a polyamine or the like; epoxy group-containing vinyl monomers formed from epichlorohydrin and bisphenol or the like; ester group-containing vinyl monomers formed from polyvalent carboxylic acids and polyalcohols or the like; and silicone group-containing vinyl monomers formed from organopolysiloxane or the like.

Preferred is styrene, benzyl methacrylate, methyl methacrylate, 2-ethylhexyl methacrylate, isobornyl methacrylate, 2-hydroxyethyl methacrylate, 2-isocyanatoethyl methacrylate, 2-[(3,5-dimethylpyrazolyl)carbonylamino]ethyl methacrylate, or 2-(0-[1'-methylpropylideneamino]carboxyamino)ethyl methacrylate.

Next, the ionic group includes an anionic group and a cationic group. The monomers that give these ionic groups are as follows.

### [Anionic group-containing monomer]

In the case of radical polymerization, the following unsaturated carboxylic acid monomer, unsaturated sulfonic acid monomer, unsaturated phosphoric acid monomer, or anhydrides or salts thereof can be used as the anionic group-containing monomer. Examples of the unsaturated carboxylic acid monomer include monoalkyl esters or the like of (meth)acrylic acid, crotonic acid, sorbic acid, maleic acid, fumaric acid, itaconic acid, or unsaturated dicarboxylic acid, and anhydrides and salts thereof. Examples of the salt include Na salt, K salt, Li salt, and ammonium salt.

Preferred examples thereof include acrylic acid, methacrylic acid, acrylic acid dimer, ω-carboxypolycaprolactone monoacrylate, ω-carboxypolycaprolactone monomethacrylate, 2-acryloyloxyethyl succinic acid, 2-methacryloyloxyethyl succinic acid, 2-acryloyloxyethyl phthalic acid, 2-methacryloyloxyethyl phthalic acid, 2-acryloyloxyethyl hexahydrophthalic acid, 2-methacryloyloxyethyl hexahydrophthalic acid, acrylamide dodecanoic acid, methacrylamide dodecanoic acid, and salts thereof.

Examples of the unsaturated sulfonic acid monomer include sulfuric acid esters of styrene sulfonic acid, vinyl sulfonic acid, 2-acrylamide-2-methylpropanesulfonic acid, and 2-hydroxyalkyl (meth)acrylate, or salts thereof, methacryloyloxypolypropylene glycol sulfate, alkenyloxypolyalkylene glycol sulfate, allyloxypolytetramethylene glycol/polyethylene glycol sulfate, allyloxypolypropylene glycol sulfate, allyloxypolypropylene glycol/polyethylene glycol sulfate, pentenyloxypolytetramethylene glycol/polyethylene glycol sulfate, pentenyloxypolypropylene glycol sulfate, pentenyloxypolypropylene glycol/polyethylene glycol sulfate, and nonyl propenyl phenoxy polyethylene glycol sulfate. Examples of the salt include Na salt, K salt, Li salt, and ammonium salt.

Preferred is styrene sulfonic acid or 2-acrylamide-2-methylpropanesulfonic acid.

Examples of the unsaturated phosphoric acid monomer include vinylphosphonic acid, phosphoric acid esters of hydroxyalkyl (meth)acrylate (having 2 to 6 carbon atoms), and (meth)acrylic alkylphosphonic acids.

In the case where the dye polymer is a polyurethane or polyurea having a repeating unit represented by General Formula (10-1) or (10-2), examples of the anionic group-containing monomer that can be used include a diol-substituted carboxylic acid monomer such as dimethylolpropionic acid or dimethylolbutyric acid, a diol-substituted sulfonic acid monomer such as bis(2-hydroxyethyl)-5-sulfoisophthalate, and anhydrides or salts thereof. Examples of the salt include Na salt, K salt, Li salt, and ammonium salt.

As the anionic group-containing monomer, it is preferable to use a carboxylic acid monomer or an anhydride or salt thereof from the viewpoint of washing resistance.

### [Cationic group-containing monomer]

As the cationic group-containing monomer, the following unsaturated amine-containing monomer, unsaturated ammonium salt-containing monomer, and the like can be used. Examples of the unsaturated amine-containing monomer include vinylamine, allylamine, vinylpyridine, methylvinylpyridine, N,N-dialkylaminostyrene, N,N-dialkylaminoalkyl (meth)acrylate, and dialkylaminoethyl vinyl ether.

Examples of the unsaturated ammonium salt-containing monomer include those obtained by quaternizing the foregoing unsaturated tertiary amine-containing monomer with a quaternizing agent.

### [Other functional monomers]

In addition to the above copolymerization method, for example, urethane polymerization of a urethane-forming group-containing monomer into which an ionic group has been introduced in advance or epoxy polymerization of an epoxy-forming group-containing monomer into which an ionic group has been introduced in advance can also be adopted. In addition, the dye polymer of the present invention can also be obtained by forming the backbone polymer through polymerization and then introducing the desired ionic group. Incidentally, the dye polymer of the present invention may contain other components. For example, polyethylene oxide having a hydroxyl group or an amido group, polyol or hydroxyalkyl ester-containing monomer, acrylamide, hydroxyalkyl acrylate, vinyl acetate, vinyl alcohol, N-ethyl methacrylamide, N-isopropyl acrylamide, N-vinyl pyrrolidone, or the like may be copolymerized as a monomer.

Specific examples of the dye polymer preferably used in the present invention are shown below, but the present invention is not limited thereto. *1 in L¹ represents a bonding position with the carbon atom of the polymer main chain, *2 represents a bonding position with D¹, and *3 in D¹ represents a bonding position with L¹.

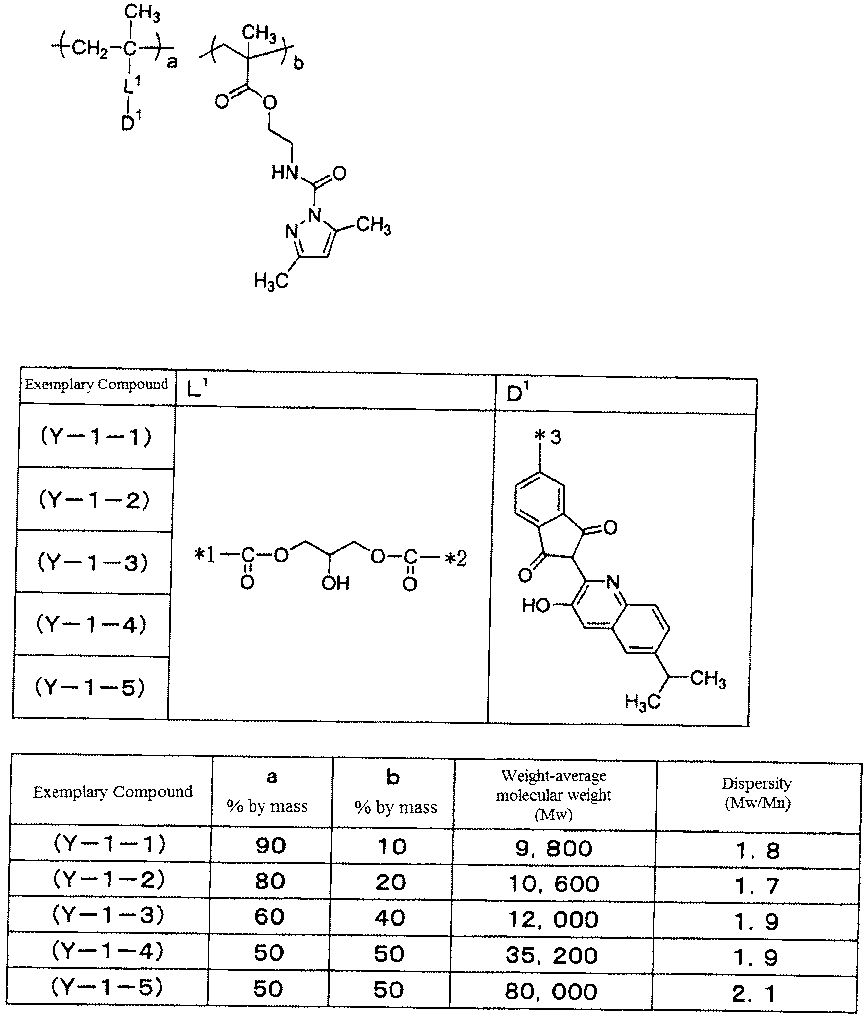

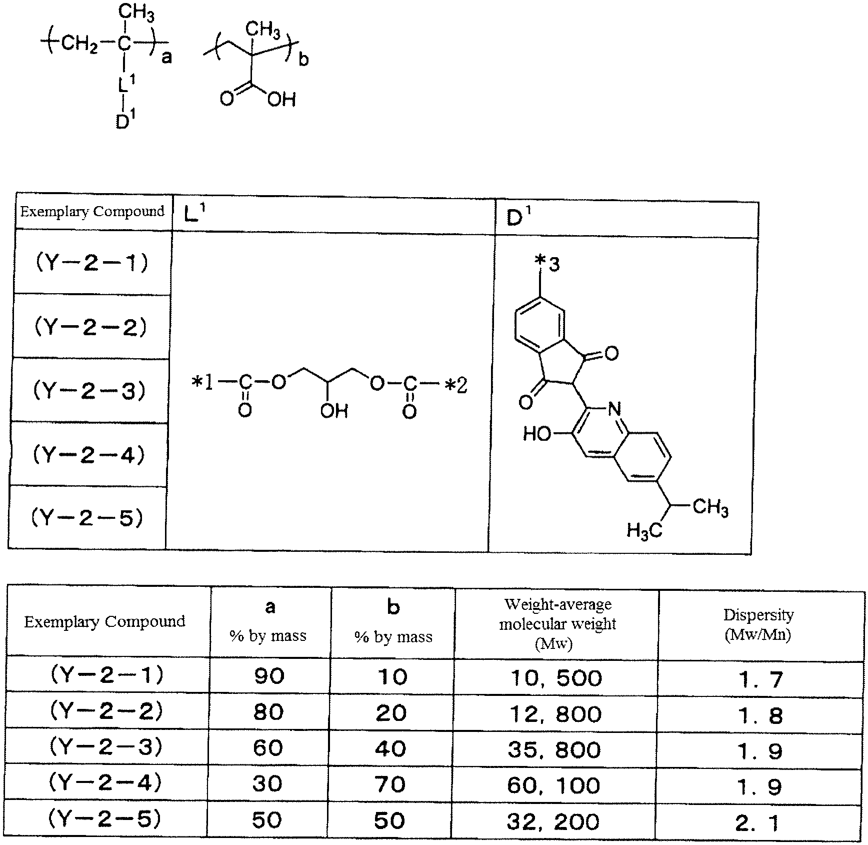

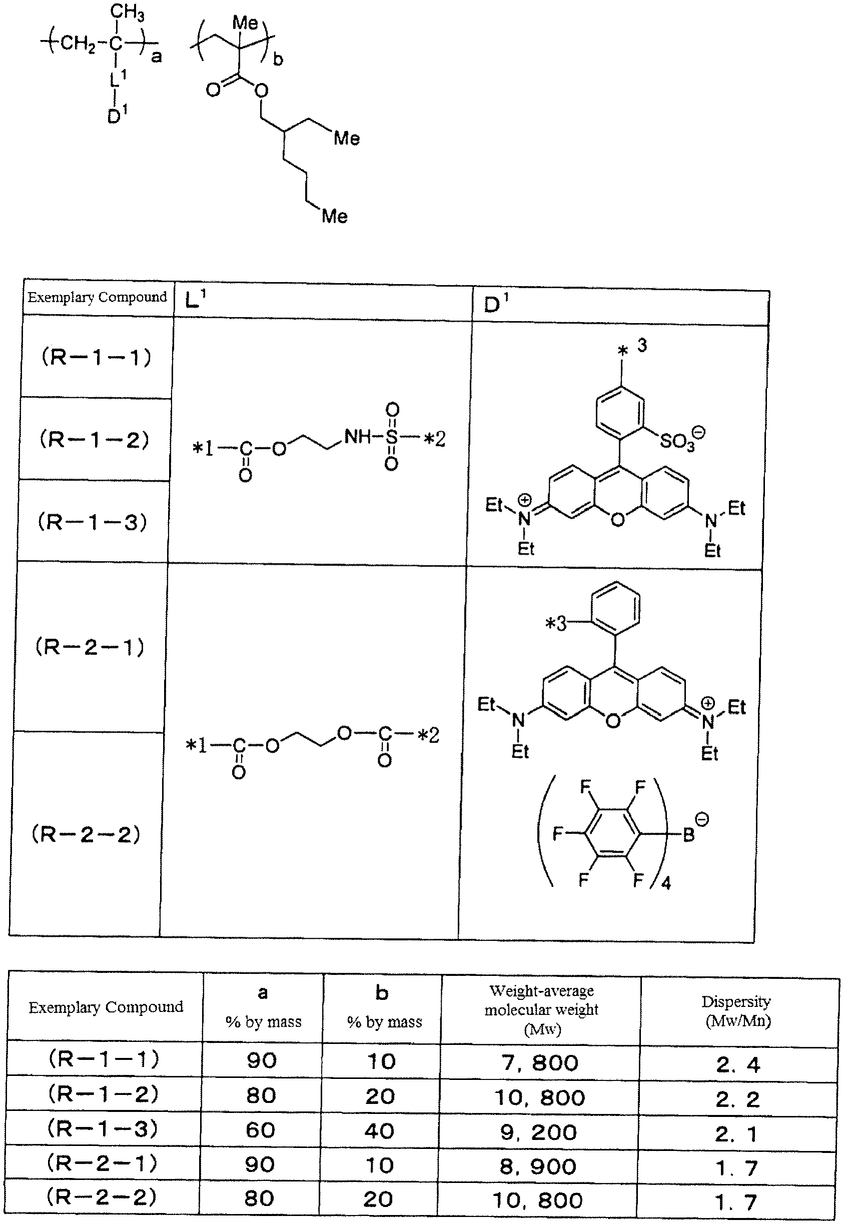

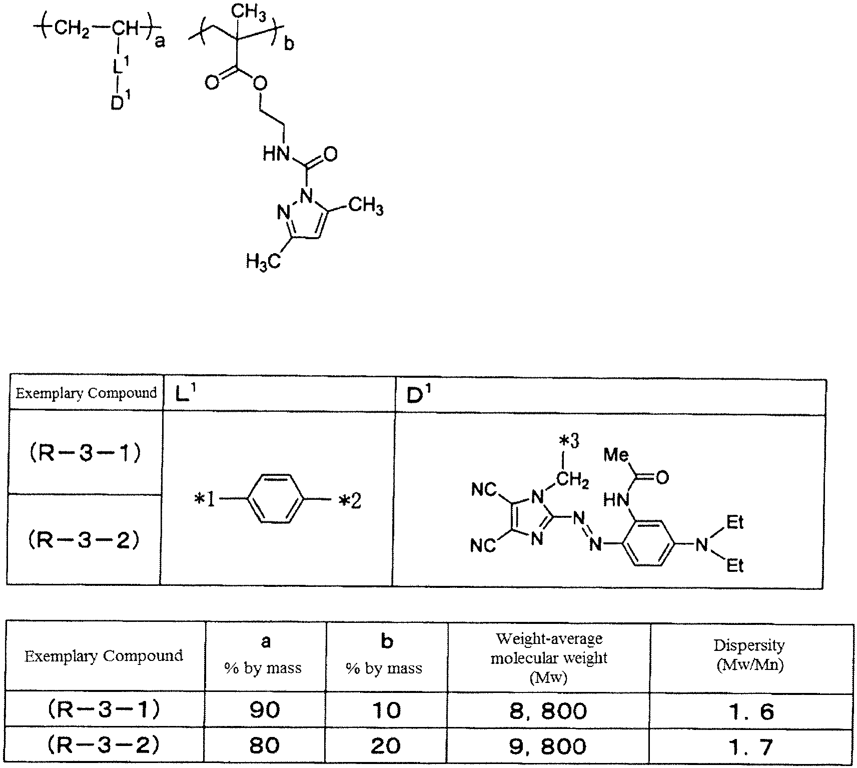

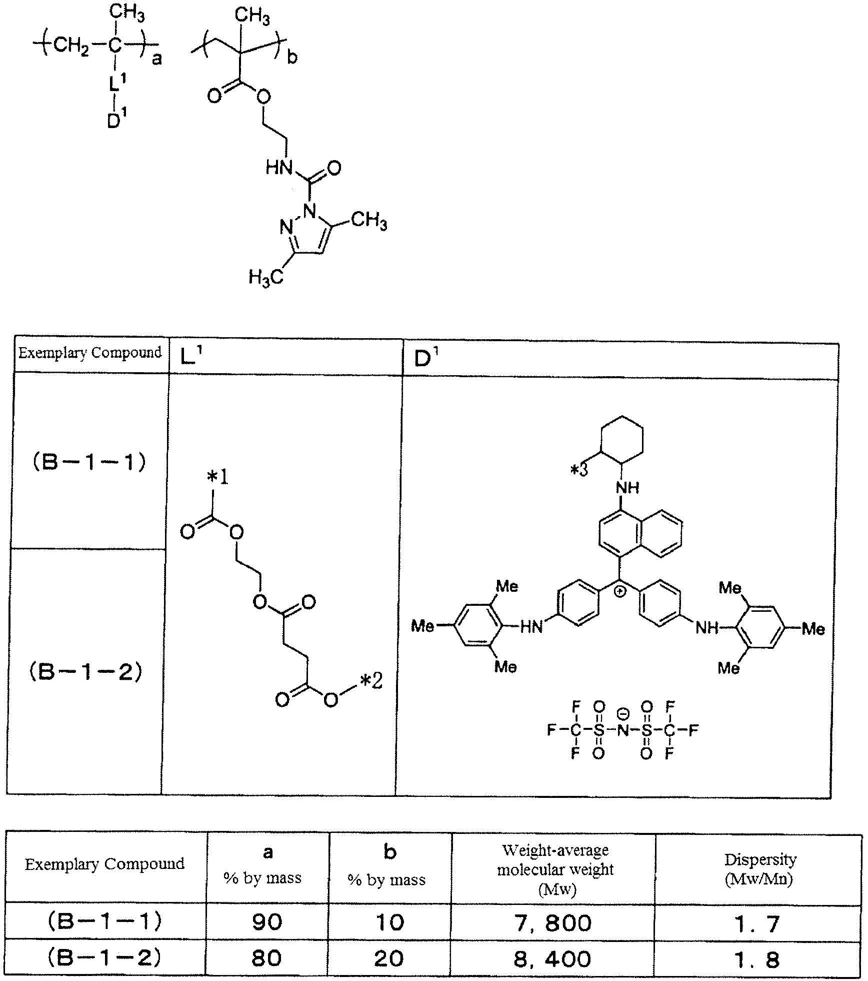

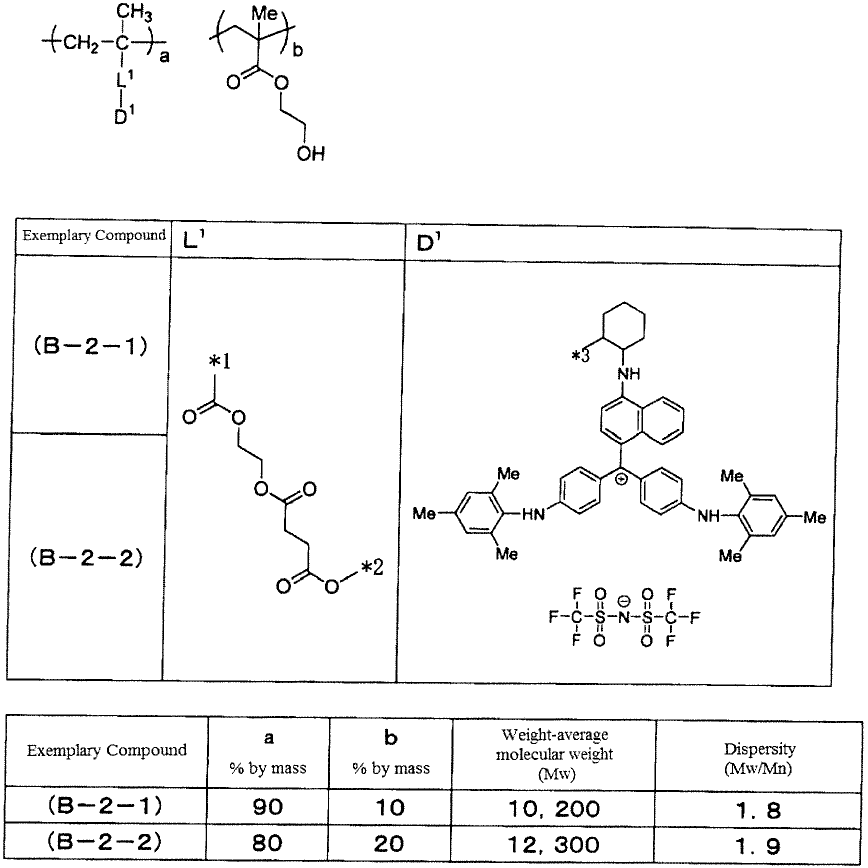

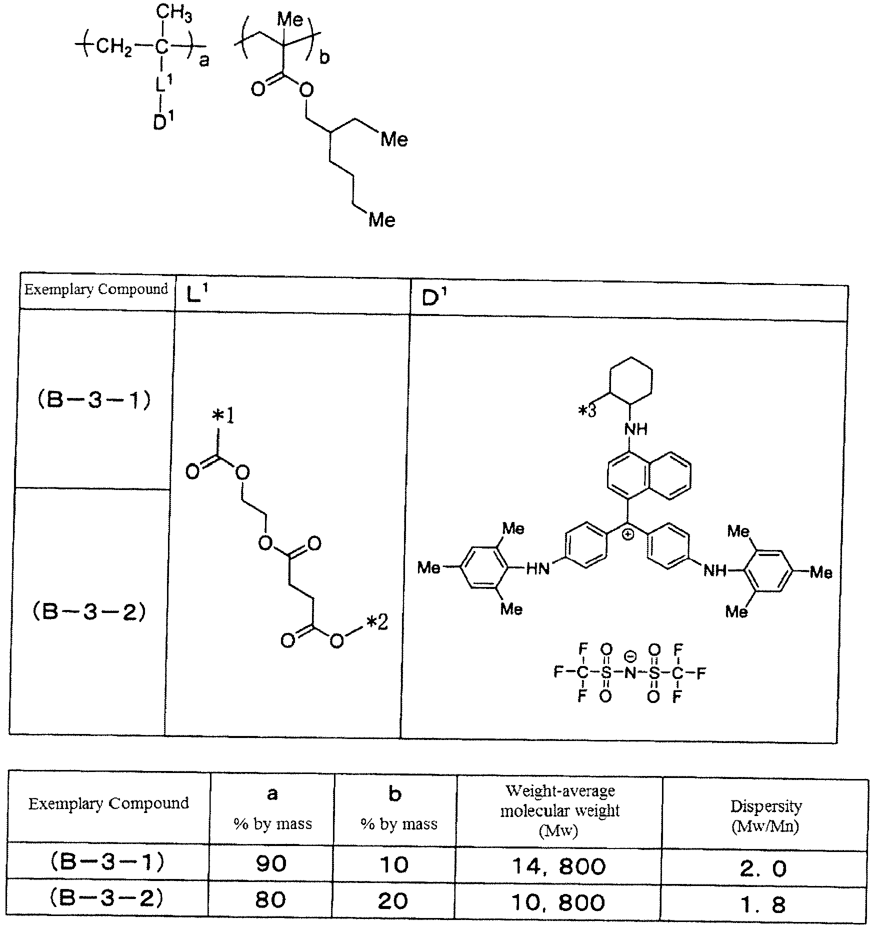

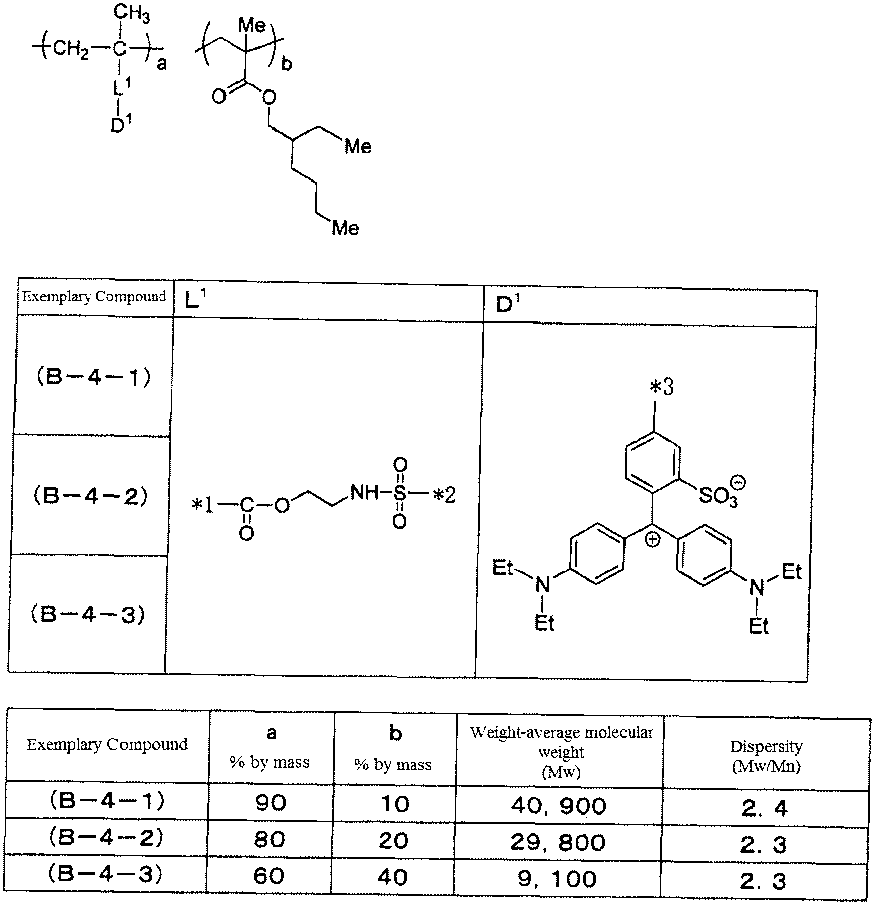

### <Aqueous dispersion of dye polymer>

The aqueous dispersion of the dye polymer contains at least water and (A) dye polymer, and preferably contains (B) aqueous organic solvent. Depending on the method for producing the aqueous dispersion of the dye polymer, either the case of using (C) low molecular weight surfactant or polymer dispersant in combination or the case of not using (C) low molecular type surfactant or polymer dispersant in combination (so-called self dispersion) may be employed.

### (A) Dye polymer

In the present invention, the above-mentioned dye polymer is used in a state of being dispersed in water (aqueous dispersion), not in a state of being dissolved in water.

In the state where the dye polymer is dispersed in water, the polymer is substantially insoluble in water, unlike the state of being dissolved in water, so that it is excellent in terms of water resistance such as washing resistance and perspiration resistance. In the present invention, since the step of washing with water is not necessary after printing, the dye polymer is a polymer that is substantially insoluble in water. In the aqueous dispersion of the present invention, the water-insoluble polymer is dispersed as particles and preferably has a particle diameter of 50 to 500 nm. In the case where the polymer is dissolved in water, the polymer is not present as particles in water. In order for the dye polymer to be an aqueous dispersion, it is preferred that the dye polymer does not have a sulfo group therein.

It is preferable to use ultrapure water as water.

### (1-1) Dispersibility

The dye polymer has a function of being readily compatible with water (wettable) at the time of dispersion in water, as a property of the dye polymer itself or by adsorption with a low molecular weight surfactant or polymer dispersant to be used in combination, a function of preventing the re-aggregation of fine particles of dye polymer by electrostatic repulsion (repulsive force) or steric repulsion, and a function of suppressing precipitation.

### (1-2) Average particle diameter

The dye polymer is in the form of particles in the aqueous dispersion. The average particle diameter of the particulate dye polymer in the aqueous dispersion of the dye polymer is preferably 50 to 500 nm, more preferably 50 to 300 nm, and particularly preferably 50 to 200 nm. In the case where the average particle diameter of the dye polymer is within this range, it can be directly printed on a fabric by an inkjet method.

As the average particle diameter in the present specification, values measured using a particle size distribution analyzer (NANOTRAC UPA EX150, trade name, manufactured by Nikkiso Co., Ltd.) were used.

The content of the dye polymer in the aqueous dispersion is preferably 0.1% to 40% by mass, more preferably 1% to 30% by mass, and particularly preferably 3% to 25% by mass. In the case where the content of the dye polymer is within this range, it is possible to obtain a high-density colored fabric in printing while ensuring storage stability as an inkjet ink.

The content of water in the aqueous dispersion is preferably 50% to 95% by mass, more preferably 55% to 90% by mass, and particularly preferably 60% to 90% by mass. In the case where the content of water is within this range, stability of the aqueous dispersion and ejection stability as an inkjet ink can be imparted. Note that the stability of the aqueous dispersion indicates that precipitation or the like is unlikely to occur.

### (B) Aqueous organic solvent

The aqueous organic solvent preferably has an aqueous solubility at 25°C of 10 g/100g-H2O or more and more preferably 20 g/100g-H₂O or more, and is particularly preferably miscible with water at any ratio. Examples of the aqueous organic solvent include an alcohol-based solvent, an amide-based solvent, and a nitrile-based solvent. For example, methanol, ethanol, n-propanol, isopropanol, n-butanol, isobutanol, tert-butanol, trimethylolpropane, ethylene glycol, diethylene glycol, triethylene glycol, polyethylene glycol, propylene glycol, butylene glycol, 1,2,6-hexanetriol, thioglycol, hexylene glycol, glycerin, diglycerin, 2-pyrrolidone, N-methyl-2-pyrrolidone, 1,5-pentanediol, 1,6-hexanediol, ethylene glycol monoethyl ether, ethylene glycol monobutyl ether, and acetonitrile can be mentioned. Preferred is trimethylolpropane, ethylene glycol, diethylene glycol, triethylene glycol, propylene glycol, glycerin, 2-pyrrolidone, 1,5-pentanediol, 1,6-hexanediol, or ethylene glycol monobutyl ether; more preferred is ethylene glycol, diethylene glycol, triethylene glycol, propylene glycol, glycerin, 2-pyrrolidone, or ethylene glycol monobutyl ether; and particularly preferred is ethylene glycol, glycerin, or 2-pyrrolidone.

The content of the aqueous organic solvent in the aqueous dispersion is preferably 5% to 50% by mass, more preferably 5% to 40% by mass, and particularly preferably 10% to 30% by mass. In the case where the content of the aqueous organic solvent is within this range, stability of the aqueous dispersion and ejection stability as an inkjet ink can be imparted.

### (C) Low molecular weight surfactant or polymer dispersant

The low molecular weight surfactant or polymer dispersant is preferably a low molecular weight surfactant or polymer dispersant having a hydrophobic group and an ionic group, and preferably has the following characteristics.

### (2-1) Dispersibility

The low molecular weight surfactant or polymer dispersant has a function in a manner that it is added in the case where the dye polymer is dispersed so that the low molecular weight surfactant or polymer dispersant is adsorbed on the surface of the dye polymer to make it compatible with water (wettable), a function of preventing the re-aggregation of the dye polymer fine particles ground by mechanical action through electrostatic repulsion (repulsive force) or steric repulsion, and a function of suppressing precipitation.

### (2-2) Molecular weight

In the case of the polymer dispersant, there is a molecular weight optimal for the dispersing effect with respect to the dye polymer. As the polymer dispersant, one having a weight-average molecular weight of 2,000 to 50,000 is preferably used. The weight-average molecular weight of the polymer dispersant is measured in the same manner as the weight-average molecular weight of the dye polymer. In the case where the weight-average molecular weight is 50,000 or less, it is unlikely to cause a bridge between the dye polymer and the dye polymer, and it hardly causes aggregation of the dye polymer. On the other hand, in the case where the weight-average molecular weight is 2,000 or more, desorption from the dye polymer is less likely to occur and the effect as a dispersant is easily exhibited.

### (2-3) Structure and morphology

The low molecular weight surfactant or polymer dispersant preferably has a hydrophobic group (electrically neutral nonpolar group with low affinity for water) and an ionic group (electrically ionic polar group with high affinity for water). The structure may be either linear or branched. In the case of a polymer surfactant, it may be any of random, alternating, periodic or blocked structure, and may be a graft polymer in which the structures of the trunk and branch are designed.

The low molecular weight surfactant and the polymer dispersant can be used in the form of an aqueous solution, a dispersion, or an emulsion in a state of being blended in water or an aqueous organic solvent.

### (2-4) Formation method and obtaining method

As the low molecular weight surfactant or polymer dispersant, for example, the following compounds can be used.

Examples of the cationic surfactant include an aliphatic amine salt, an aliphatic quaternary ammonium salt, a benzalkonium salt, a benzethonium chloride, a pyridinium salt, and an imidazolinium salt. Examples of the anionic surfactant include fatty acid soap (for example, sodium oleate), N-acyl glutamate, alkyl sulfonate, alkyl benzene sulfonate, alkyl sulfoacetate, sulfated oil, higher alcohol sulfate ester salt, and alkyl phosphate ester salt. Examples of the amphoteric surfactant include those of carboxybetaine type, those of sulfobetaine type, aminocarboxylic acid salt, and imidazoliniumbetaine. An anionic surfactant of amine oxide type such as N,N-dimethyl-N-alkylamine oxide can also be mentioned as a preferred example.

Examples of the nonionic surfactant include polyoxyethylene alkyl ether, polyoxyethylene lanolin derivative, polyoxyethylene polyoxypropylene alkyl ether, polyoxyethylene glycerin fatty acid ester, polyethylene glycol fatty acid ester, polyglycerin fatty acid ester, sorbitan fatty acid ester, propylene glycol fatty acid ester, and acetylene glycol. SURFYNOLS (available from Air Products & Chemicals Inc.) which is an acetylene-based polyoxyethylene oxide surfactant is also a preferred example. Further, surfactants described in JP1984-157636A (JP-S59-157636A) (pages 37 and 38) and Research Disclosure, No. 308119 (1989) can also be used.

The content of the low molecular weight surfactant is preferably in the range of 0.001% by mass to 5.0% by mass with respect to the total mass of the aqueous dispersion, and it is preferable to adjust the surface tension of the aqueous dispersion within such a range.

The polymer dispersant can be produced by copolymerizing a hydrophobic group-containing monomer and an ionic group-containing monomer. Each of the monomers may be used alone or in combination of two or more thereof. The hydrophobic group-containing monomer and the ionic group-containing monomer are the same as the foregoing monomers of the copolymerization component of the dye polymer. As the polymer dispersant, DISPERBYK-194N (trade name, manufactured by BYK Japan K.K.) can also be used.

The content of the polymer dispersant is preferably in the range of 0.001% by mass to 50% by mass with respect to the total mass of the aqueous dispersion, and it is preferable to adjust the surface tension of the aqueous dispersion within such a range.

As a method for producing an aqueous dispersion of a dye polymer, there are
(i) a method in which a powder or paste of a dye polymer, and optionally a low molecular weight surfactant or a polymer dispersant are mixed in water or an aqueous organic solvent, and then the mixture is finely dispersed together with glass beads, zirconia beads, titania beads, stainless steel balls, or the like with an attritor or a mill,
(ii) a method of using emulsion polymerization which is carried out by mixing water or an aqueous organic solvent, a polymerizable dye monomer poorly soluble in water or an aqueous organic solvent, optionally a copolymerizable monomer, and an emulsifier (surfactant), and adding a polymerization initiator (usually a radical generator) soluble in water or an aqueous organic solvent thereto,
(iii) a method in which a dye polymer is synthesized in an organic solvent, followed by addition of water and optionally a surfactant to emulsify the synthesized dye polymer, and the organic solvent is removed to obtain an aqueous dispersion of the dye polymer,
(iv) a method in which a dye polymer is synthesized in an organic solvent, water and optionally a surfactant or a solvent are added, and then the solvent other than water is removed to obtain an aqueous dispersion of the dye polymer,
(v) a method in which a monomer of a dye polymer, a polymerization initiator, and optionally a surfactant are added and emulsified in water, polymerization is initiated to polymerize the monomer to obtain an aqueous dispersion of the dye polymer,
(vi) a method in which a monomer of a dye polymer, a polymerization initiator, an organic solvent, and optionally a surfactant are added and emulsified in water, polymerization is initiated to polymerize the monomer, and the organic solvent is removed simultaneously with or after polymerization to obtain an aqueous dispersion of the dye polymer,
(vii) a method in which a monomer of a dye polymer and optionally a surfactant are added and emulsified in water, a polymerization initiator is added, polymerization is initiated to polymerize the monomer, thus obtaining an aqueous dispersion of the dye polymer,
(viii) a method in which a monomer of a dye polymer, and optionally a surfactant or an organic solvent are added and emulsified in water, a polymerization initiator or optionally a polymerization initiator solution is added, polymerization is initiated to polymerize the monomer, and the organic solvent is removed simultaneously with or after the polymerization to obtain an aqueous dispersion of the dye polymer, and the like, which can be suitably used.

As necessary, a glycol solvent as a wetting agent, such as ethylene glycol, propylene glycol, diethylene glycol, glycerin, or polyethylene glycol, and urea, hyaluronic acid, sucrose, or the like can also be added to these dispersions. In addition, although the above-mentioned nonionic surfactant or anionic surfactant can be added as a dispersion aid, it is preferred that these surfactants are blended in small amounts so as not to deteriorate the performance as dispersion stability.

### <Coloring composition>

The present invention also relates to a coloring composition including an aqueous dispersion of a dye polymer. The coloring composition containing an aqueous dispersion of a dye polymer contains the above-mentioned aqueous dispersion of a dye polymer, and preferably further contains water or an aqueous organic solvent. As necessary, components such as other coloring agents, organic solvents, surfactants, and various additives may be contained.

The coloring composition containing an aqueous dispersion of a dye polymer of the present invention has excellent light fastness and thus can be used not only for fiber dyeing, but also for paper medium dyeing, plastic dyeing, coating materials, coating films, and building materials.

The coloring composition of the present invention may further contain coloring agents (dyes, pigments, and the like) other than the dye polymer. In the case of containing other coloring agents, the content of the dye polymer is preferably 50% by mass or more, more preferably 80% by mass or more, and still more preferably 100% by mass or more, that is, containing only the dye polymer, with respect to the total mass of the coloring agent including the dye polymer.

In view of obtaining a satisfactory dyeing concentration and the storage stability of the coloring composition, the content of the coloring agent (including the dye polymer and other coloring agents) in the coloring composition is preferably 0.1% by mass to 20% by mass, more preferably 1% by mass to 15% by mass, and still more preferably 3% by mass to 12% by mass with respect to the total mass of the coloring composition.

### <Organic solvent>

Examples of the organic solvent that can be contained in the coloring composition of the present invention include polyhydric alcohols (for example, ethylene glycol, glycerin, 2-ethyl-2-(hydroxymethyl)-1,3-propanediol, tetraethylene glycol, triethylene glycol, tripropylene glycol, 1,2,4-butanetriol, diethylene glycol, propylene glycol, dipropylene glycol, butylene glycol, 1,6-hexanediol, 1,2-hexanediol, 1,5-pentanediol, 1,2-pentanediol, 2,2-dimethyl-1,3-propanediol, 1,2-butanediol, 2-methyl-2,4-pentanediol, 3-methyl-1,5-pentanediol, 3-methyl-1,3-butanediol, and 2-methyl-1,3-propanediol); amines (for example, ethanolamine and 2-(dimethylamino)ethanol), monohydric alcohols (for example, methanol, ethanol, and butanol); alkyl ethers of polyhydric alcohols (for example, diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, and dipropylene glycol monomethyl ether); 2,2'-thiodiethanol; amides (for example, N,N-dimethylformamide); sulfur-containing compounds such as sulfolane, dimethylsulfoxide, and 3-sulfolane; heterocyclic compounds (for example, 2-pyrrolidone, N-methyl-2-pyrrolidone, 1,3-dimethyl-2-imidazolidinone, and N-ethylmorpholine); and acetonitrile. These compounds may be used alone or in combination of two or more thereof.

The organic solvent that can be contained in the coloring composition of the present invention is preferably the aforementioned aqueous organic solvent.

The content of the organic solvent in the coloring composition of the present invention is preferably 1% by mass to 60% by mass and more preferably 2% by mass to 50% by mass with respect to the total mass of the coloring composition.

### <Surfactant>

From the viewpoint of enhancing storage stability, ejection stability, ejection accuracy, and the like, the coloring composition of the present invention can further use various surfactants. Any of cationic, anionic, amphoteric, and nonionic surfactants can be used as the surfactant.

Examples of the cationic surfactant include an aliphatic amine salt, an aliphatic quaternary ammonium salt, a benzalkonium salt, a benzethonium chloride, a pyridinium salt, and an imidazolinium salt.

Examples of the anionic surfactant include fatty acid soap, N-acylglutamate, alkylsulfonate, alkylbenzenesulfonate, alkylsulfoacetate, sulfated oil, higher alcohol sulfate ester salt, and alkylphosphate ester salt.

Examples of the amphoteric surfactant include those of carboxybetaine type, those of sulfobetaine type, aminocarboxylic acid salt, and imidazolinium betaine. Those of amine oxide type such as N,N-dimethyl-N-alkylamine oxide can also be mentioned as a preferable example.

Examples of the nonionic surfactant include polyoxyethylene alkyl ether, polyoxyethylene lanolin derivative, polyoxyethylene polyoxypropylene alkyl ether, polyoxyethylene glycerin fatty acid ester, polyethylene glycol fatty acid ester, polyglycerin fatty acid ester, sorbitan fatty acid ester, propylene glycol fatty acid ester, and acetylene glycol. SURFYNOLS (trade name, manufactured by Air Products & Chemicals Inc.) which is an acetylene-based polyoxyethylene oxide surfactant is also a preferred example.

Further, surfactants described in JP1984-157636A (JP-S59-157636A) (pages 37 and 38) and Research Disclosure, No. 308119 (1989) can also be used.

In the case where these surfactants are used, one type of surfactant may be used alone or two or more types thereof may be used in combination.

The content of the surfactant in the coloring composition of the present invention is preferably in the range of 0.001% by mass to 5.0% by mass with respect to the total mass of the coloring composition, and it is preferable to adjust the surface tension of the coloring composition within such a range.

### <Various additives>

The coloring composition of the present invention may further contain various conventionally known additives. Examples of the additives include a pH adjuster such as an acid, a base, or a buffer, a fluorescent brightener, a surface tension adjuster, an antifoaming agent, an anti-drying agent, a lubricant, a thickener, an ultraviolet absorber, an antifading agent, an antistatic agent, a matting agent, an antioxidant, a resistivity modifier, a rust inhibitor, an inorganic pigment, an anti-reducing agent, a preservative, a fungicide, a chelating agent, and a crosslinking agent.

### (UV absorber)

Examples of the UV absorbers that can be used include benzotriazole-based compounds described in JP1983-185677A (JP-S58-185677A), JP1986-190537A (JP-S61-190537A), JP1990-782A (JP-H02-782A), JP1993-197075A (JP-H05-197075A), and JP1997-34057A (JP-H09-34057A); benzophenone-based compounds described in JP1971-2784A (JP-S46-2784A), JP1993-194483A (JP-H05-194483A), and US3214463B; cinnamic acid-based compounds described in JP1973-30492B (JP-S48-30492B), JP1981-21141B (JP-S56-21141B), and JP1998-88106A (JP-H10-88106A); triazine-based compounds described in JP1992-298503A (JP-H04-298503A), JP1996-53427A (JP-H08-53427A), JP1996-239368A (JP-H08-239368A), JP1998-182621 A (JP-H10-182621 A), and JP 1996-501291A (JP-H08-501291A); compounds described in Research Disclosure No. 24239; and compounds represented by stilbene- and benzoxazole-based compounds, which absorb ultraviolet rays to emit fluorescence, the so-called fluorescent brighteners. In the case where the coloring composition contains an ultraviolet absorber, the storage stability of the image can be improved.

### (Antifading agent)

A variety of organic and metal complex-based antifading agents can be used as the antifading agent. Examples of organic antifading agents include hydroquinones, alkoxyphenols, dialkoxyphenols, phenols, anilines, amines, indanes, chromans, alkoxyanilines, and heterocyclic rings. Examples of the metal complexes that can be used include nickel complexes and zinc complexes. More specifically, there can be used compounds described in patents cited in Research Disclosure, No. 17643, Items VII-I to J, ibid., No. 15162, ibid., No. 18716, page 650, left column, ibid., No. 36544, page 527, ibid., No. 307105, page 872, and ibid., No. 15162, and compounds encompassed by general formulae and compound examples of representative compounds described in JP1987-215272A (JP-S62-215272A), pages 127 to 137 and US5356443B. In the case where the coloring composition contains the antifading agent, the storage stability of the image can be improved.

### (Preservative and fungicide)

The coloring composition of the present invention may contain at least one of a preservative or a fungicide to maintain long-term storage stability of the coloring composition. In the case where the coloring composition contains a preservative or a fungicide, long-term storage stability can be enhanced. Examples of the preservative and the fungicide include an aromatic halogen compound (for example, PREVENTOL CMK; trade name, manufactured by LANXESS AG), methylenedithiocyanate, a halogen-containing nitrogen sulfur compound, and 1,2-benzisothiazolin-3-one (for example, PROXEL GXL; trade name, manufactured by Arch Chemicals, Inc.), sodium dehydroacetate, sodium benzoate, sodium pyridinethione-1-oxide, p-hydroxybenzoic acid ethyl ester, 1,2-benzisothiazolin-3-one and salts thereof.

As for the preservative and fungicide, one type of preservative or fungicide may be used alone or two or more types thereof may be used in combination. In the case where the coloring composition contains a preservative and a fungicide, the content of the preservative and the fungicide is preferably 0.02% by mass to 1.00% by mass with respect to the total mass of the coloring composition.

### (Anti-drying agent)

An aqueous organic solvent having a lower vapor pressure than water can be suitably used as the anti-drying agent. In the case where the coloring composition contains an anti-drying agent, clogging due to drying of the coloring composition at the jetting port of the nozzle of the discharging head which discharges the coloring composition can be prevented in the case of being used for inkjet recording. Specific examples of the anti-drying agent include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols such as ethylene glycol monomethyl (or ethyl) ether, diethylene glycol monomethyl (or ethyl) ether, and triethylene glycol monoethyl (or butyl) ether; heterocyclic rings such as 2-pyrrolidone, N-methyl-2-pyrrolidone, 1,3-dimethyl-2-imidazolidinone, and N-ethylmorpholine; sulfur-containing compounds such as sulfolane, dimethyl sulfoxide, and 3-sulfolane; polyfunctional compounds such as diacetone alcohol and diethanolamine; and urea derivatives, among which polyhydric alcohols such as glycerin and diethylene glycol are more preferable.

The anti-drying agents may be used alone or in combination of two or more thereof. In the case where the coloring composition contains an anti-drying agent, the content of the anti-drying agent is preferably 10% by mass to 50% by mass with respect to the total mass of the coloring composition.

### (pH adjuster)

As the pH adjuster, for example, a neutralizing agent such as an organic base or an inorganic alkali can be used. In the case where the coloring composition is used for inkjet recording, the storage stability of the coloring composition can be improved by including the pH adjuster in the coloring composition. The pH adjuster is preferably added so that the pH of the coloring composition is 5 to 12, more preferably 5 to 9.

### (Surface tension adjuster and antifoaming agent)

Examples of the surface tension adjuster include various surfactants such as a nonionic surfactant, a cationic surfactant, and an anionic surfactant. Preferred examples of the surfactant are the same as those exemplified in the above-mentioned surfactant column.

Fluorine-based and silicone-based compounds are preferable as the antifoaming agent.

In the case where the coloring composition of the present invention is used for inkjet printing (inkjet ink), the surface tension of the coloring composition is preferably adjusted to 20 mN/m to 70 mN/m and more preferably 25 mN/m to 60 mN/m. In the case where the coloring composition is used for inkjet printing, the viscosity of the coloring composition is preferably adjusted to 40 mPa·s or less, more preferably 30 mPa·s or less, and particularly preferably 20 mPa·s or less.

The surface tension and viscosity can be adjusted by adding various additives such as a viscosity adjuster, a surface tension adjuster, a resistivity modifier, a film conditioning agent, an ultraviolet absorber, an antioxidant, an antifading agent, a fungicide, a rust inhibitor, a dispersant, and a surfactant.

### (Chelating agent)

The chelating agent is suitably used for the purpose of preventing deposits such as precipitates from forming in the coloring composition and for the purpose of improving storage stability and clogging recoverability. In the case where a dye is used as the coloring agent of the coloring composition, it is known that the metals (Ca, Mg, Si, Fe, and the like) contained in the coloring composition may cause generation of precipitates and deterioration of clogging recoverability, and therefore it is necessary to control metal ions to a certain amount or less. In the case of using a copper complex dye, it is also known that generation of precipitates and deterioration of clogging recoverability are recognized in the case where the amount of free copper ions is not controlled even in the case where the amount of metal ions is controlled (See JP2000-355665A and JP2005-126725A).

Examples of the chelating agent include ethylenediaminetetraacetic acid (EDTA), nitrilotriacetic acid, hydroxyethylethylenediaminetriacetic acid, uramyldiacetic acid, and metal salts thereof (for example, sodium salts).

### (Crosslinking agent)

The coloring composition may contain a crosslinking agent for the purpose of improving the rub resistance and washing fastness of the colored fabric. Examples of the crosslinking agent include blocked isocyanate crosslinking agents (for example, MEIKANATE CX, MEIKANATE TP-10, MEIKANATE DM-35HC, and MEIKANATE SU-268A, trade names, all manufactured by Meisei Chemical Works, Ltd.), and polyfunctional epoxy crosslinking agents (for example, DENACOL EX-313, DENACOL EX-314, DENACOL EX-322, and DENACOL EX-411, trade names, all manufactured by Nagase ChemteX Corporation).

The coloring composition of the present invention can be suitably used as an inkjet ink having a restriction on the amount of the coloring agent supplied on the fabric.

### <Inkjet ink>

The present invention also relates to an inkjet ink including at least an aqueous dispersion of a dye polymer having a repeating unit containing a structure derived from a dye. The components contained in the inkjet ink are the same as those shown in the coloring composition of the present invention described above.

The content of the dye polymer and other components in the inkjet ink can be in the range of the content shown in the coloring composition of the present invention described above.

The inkjet ink containing an aqueous dispersion of a dye polymer of the present invention is particularly useful from the viewpoint of workability since it can be directly printed on a fabric having no undercoat without blurring.

The inkjet ink is preferably an inkjet ink for printing (inkjet printing ink).

### <Ink cartridge>

The ink cartridge of the present invention is an ink cartridge filled with the foregoing inkjet ink of the present invention.

### <Inkjet printing method>

The inkjet printing method of the present invention is an inkjet printing method including at least a step of directly printing an inkjet ink containing an aqueous dispersion of a dye polymer having a repeating unit containing a structure derived from a dye directly on a fabric by an inkjet method.

The inkjet printing method of the present invention exhibits the effects of simple workability and the excellent quality (texture) of the colored fabric while not producing waste materials such as wastewater and transfer paper.

Further, adding a heating step is advantageous in that the dye polymer is fused to the fiber so that the dye polymer is more integrated with the fiber, there is no lose of texture, and rub resistance or the like can be further imparted.

### <Heat treatment step>

The inkjet printing method of the present invention preferably further includes a heat treatment step. In particular, it is possible to melt (or soften) the dye polymer particles by carrying out a heat treatment step after printing on the fabric, thereby increasing the adhesiveness to the fibers (that is, it can be melt-dyed by a heat treatment). After drying, the colored fabric is preferably subjected to a heat treatment for the purpose of melt-dyeing as described above. The heat treatment is preferably carried out usually at 100°C to 250°C, more preferably 100°C to 200°C, and particularly preferably 120°C to 200°C. As for the heat treatment time, it is preferable to carry out the heat treatment for 30 seconds to 3 minutes. Further, in the case where a reactive group (for example, a blocked isocyanate group) is introduced into the dye polymer, or in the case where a crosslinking agent (for example, a blocked isocyanate crosslinking agent or a polyfunctional epoxy crosslinking agent) is used in combination as the additive, in this heat treatment step, from the viewpoint of rub resistance, it is preferable to carry out a crosslinking reaction by using a reactive group (for example, a blocked isocyanate group) introduced into the dye polymer, or a crosslinking agent (for example, a blocked isocyanate crosslinking agent or a polyfunctional epoxy crosslinking agent) used in combination as the additive.

### <Post-treatment>

The fabric (colored fabric) colored with the inkjet ink containing an aqueous dispersion of a dye polymer of the present invention exhibits excellent softness of texture and fastness (rub resistance), but padding a post-treatment agent on the entire surface of the colored fabric, as necessary, can provide a colored fabric having further improved softness of texture and fastness (in particular, rub resistance). Examples of the post-treatment agent for the purpose of softening of texture include a cationic surfactant, an anionic surfactant, a nonionic surfactant, a dimethyl silicone oil, an aminosilicone oil, a carboxy-modified silicone oil, a hydroxy-modified silicone oil, a fatty acid, a fatty acid amide, a mineral oil, a vegetable oil, an animal oil, and a plasticizer.

Examples of the post-treatment agent for the purpose of improving the slipperiness of the surface of the colored fabric include a metallic soap, a paraffin wax, a carnauba wax, a microcrystalline wax, a dimethyl silicone oil, an aminosilicone oil, a carboxy-modified silicone oil, and a hydroxy-modified silicone oil.

The padding treatment is carried out in a manner that the colored fabric is immersed in a solution prepared by emulsifying, heat-emulsifying, or dispersing these post-treatment agents in a water solvent by stirring with a mixer, and the colored fabric is dried with a mangle or the like, followed by a heat treatment.

Also, the rub resistance of the colored fabric can be improved by blending a small amount of a resin emulsion as a fixing agent in the post-treatment agent. It is preferred that the blending amount of the resin emulsion with respect to the post-treatment agent is less than 5%, which is thus preferable because the softness of the texture of the colored fabric is not easily impaired.

The resin emulsion to be blended as a fixing agent in the post-treatment agent is not particularly limited, but an acrylic acid ester resin emulsion, a urethane resin emulsion, an ethylene/vinyl acetate copolymer resin (EVA resin) emulsion, a silicone/acrylic resin emulsion, a polyester resin emulsion, or the like can be used. In order to soften the texture of the colored fabric, the glass transition point of these resin emulsions is preferably 0°C or lower.

### <Fabric>

The fabric to which the inkjet printing method of the present invention can be applied is as follows. Examples of the fabric (fiber type) include synthetic fibers such as nylon, polyester, and acrylonitrile, semisynthetic fibers such as acetate and rayon, natural fibers such as cotton, silk, and wool, mixed fibers thereof, woven fabrics, knitted fabrics, and nonwoven fabrics.

Examples of clothing items include T-shirts, trainers, jerseys, pants, sweatsuits, dresses, and blouses. It is also suitable for bedding, handkerchiefs, cushion covers, curtains, and the like.

### <Colored fabric>

The present invention also relates to a colored fabric including a fabric and a dye polymer having a repeating unit containing a structure derived from a dye.

The fabric and the dye polymer are as described above.

The colored fabric of the present invention can be obtained by printing a fabric by the above-described inkjet printing method of the present invention.

Since the colored fabric (colored fiber product) produced by the inkjet printing method of the present invention exhibits outstanding effects in any of the properties of texture, washing fastness, rubbing fastness, and printing workability, the inkjet printing method, coloring composition, inkjet ink, ink cartridge, and colored fabric of the present invention are of high value.

### EXAMPLES

### (Synthesis Example 1)

### [Synthesis of dye polymer (Y-1-1)]

Exemplary Compound (Y-1-1) was synthesized according to the following scheme.

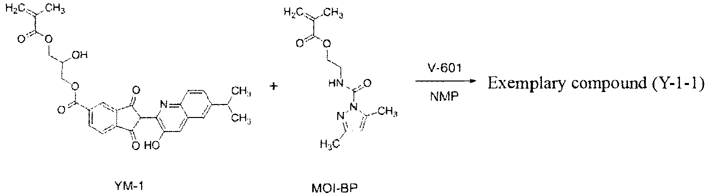

10 mL of N-methylpyrrolidone (NMP) was added to a 100 mL three-neck flask, and the internal temperature was raised to 85°C. A solution of 9.0 g of YM-1(synthesized by the method described in Japanese Patent No. 5315267) which is a polymerizable monomer, 1.0 g of MOI-BP (trade name: KARENZ MOI-BP, manufactured by Showa Denko K.K.) which is a polymerizable monomer, 0.98 g of V-601 (trade name, manufactured by Wako Pure Chemical Industries, Ltd.), and 0.35 g of 1-dodecanethiol dissolved in 13.24 g of NMP was added dropwise over 3 hours. After completion of the dropwise addition, the mixture was reacted at 85°C for 1 hour to obtain Reaction Solution A. Thereafter, V-601 (0.098 g) was added to Reaction Solution A, and the reaction was further carried out at 85°C for 2 hours to obtain Reaction Solution B. Reaction Solution B was allowed to cool to room temperature (20°C), poured into 500 mL of water, crystals were precipitated, and the crystals were filtered off by filtration. The filtered crystals were dried in a blast dryer at 60°C for one day to obtain Exemplary Compound (Y-1-1) as a yellow powder. The yield of Exemplary Compound (Y-1-1) was 8.7 g. The absorption maximum wavelength of the UV-Vis absorption spectrum of Exemplary Compound (Y-1-1) in a diluted tetrahydrofuran (THF) solution was 441 nm. In addition, the weight-average molecular weight (Mw) of Exemplary Compound (Y-1-1) as measured by gel permeation chromatography (GPC) was 9,800 (in terms of polystyrene). The Tg of the polymer at differential scanning calorimetry (DSC) was 180°C.

### (Synthesis Example 2)

### [Synthesis of dye polymer (Y-2-1)]

Exemplary Compound (Y-2-1) was synthesized according to the following scheme.

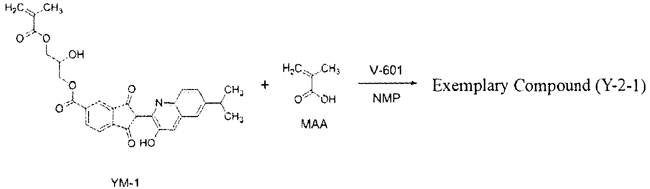

Exemplary Compound (Y-2-1) was synthesized in the same manner as Synthesis Example 1, except that MOI-BP (trade name: KARENZ MOI-BP, manufactured by Showa Denko K.K.) used for synthesis of Exemplary Compound (Y-1-1) of Synthesis Example 1 was replaced with methacrylic acid (MAA), the amount of V-601 (trade name, manufactured by Wako Pure Chemical Industries, Ltd.) in a solution to be added dropwise with the polymerizable monomer was changed from 0.98 g to 0.126 g, and the amount of 1-dodecanethiol was changed from 0.35 g to 0.443 g. The absorption maximum wavelength of the UV-Vis absorption spectrum of Exemplary Compound (Y-2-1) in a diluted tetrahydrofuran (THF) solution was 441 nm. In addition, the weight-average molecular weight (Mw) of Exemplary Compound (Y-2-1) by GPC measurement was 10,500 (in terms of polystyrene). The Tg of the polymer at differential scanning calorimetry (DSC) was 160°C.

### (Synthesis Example 3)

### [Synthesis of dye polymer (R-2-1)]

Exemplary Compound (R-2-1) was synthesized according to the following scheme.

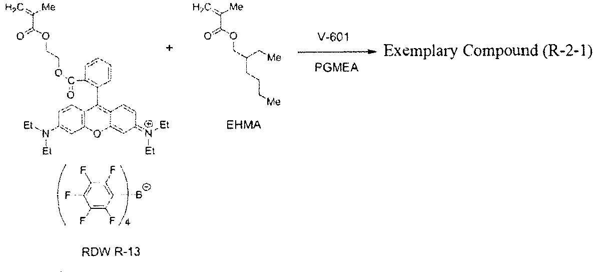

Exemplary Compound (R-2-1) was synthesized in the same manner as Synthesis Example 1, except that YM-1 used for synthesis of Exemplary Compound (Y-1-1) of Synthesis Example 1 was replaced with RDW R-13 (trade name, manufactured by Wako Pure Chemical Industries, Ltd.), MOI-BP (trade name: KARENZ MOI-BP, manufactured by Showa Denko K.K.) was replaced with 2-ethylhexyl methacrylate (EHMA), the amount of V-601 (trade name, manufactured by Wako Pure Chemical Industries, Ltd.) in a solution to be added dropwise with the polymerizable monomer was changed from 0.98 g to 0.057 g, the amount of 1-dodecanethiol was changed from 0.35 g to 0.200 g, and NMP was changed to propylene glycol-1-monomethyl ether-2-acetate (PGMEA). The absorption maximum wavelength of the UV-Vis absorption spectrum of Exemplary Compound (R-2-1) in a diluted tetrahydrofuran (THF) solution was 562 nm. In addition, the weight-average molecular weight (Mw) of Exemplary Compound (R-2-1) by GPC measurement was 8,900 (in terms of polystyrene). The Tg of the polymer at differential scanning calorimetry (DSC) was 120°C.

### (Synthesis Example 4)

### [Synthesis of dye polymer (R-3-1)]

Exemplary Compound (R-3-1) was synthesized according to the following scheme.

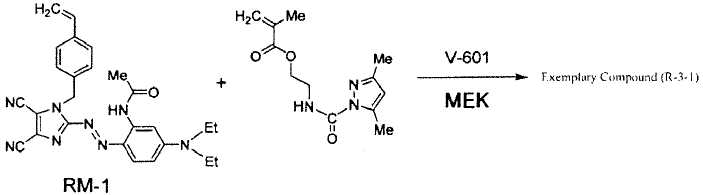

Exemplary Compound (R-3-1) was synthesized in the same manner as Synthesis Example 1, except that YM-1 used for synthesis of Exemplary Compound (Y-1-1) of Synthesis Example 1 was replaced with RM-1 (synthesized according to the description in Chemical Abstract 84, 19172), the amount of V-601 (trade name, manufactured by Wako Pure Chemical Industries, Ltd.) in a solution to be added dropwise with the polymerizable monomer was changed from 0.98 g to 0.510 g, 1-dodecanethiol was not added, and the solvent was changed from NMP to 2-butanone (MEK). The absorption maximum wavelength of the UV-Vis absorption spectrum of Exemplary Compound (R-3-1) in a diluted tetrahydrofuran (THF) solution was 542 nm. In addition, the weight-average molecular weight (Mw) of Exemplary Compound (R-3-1) by GPC measurement was 8,800 (in terms of polystyrene). The Tg of the polymer at differential scanning calorimetry (DSC) was 180°C.

### (Synthesis Example 5)

### [Synthesis of dye polymer (B-4-3)]

Exemplary Compound (B-4-3) was synthesized according to the following scheme.

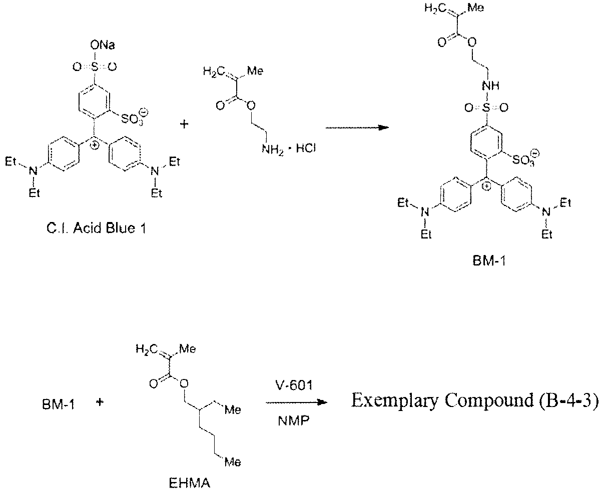

### (Synthesis of Intermediate (BM-1))

67.65 g of C. I. Acid Blue 1 (manufactured by Tokyo Chemical Industry Co., Ltd.) was stirred in 1.2 L of chloroform, and the internal temperature was cooled to 0°C. While maintaining the internal temperature at 0°C, 69.5 mL of oxalyl chloride was added dropwise thereto, and then 6 mL of N,N-dimethylformamide (DMF) was added dropwise. Thereafter, the mixture was reacted at room temperature for 24 hours and then at 35°C to 40°C for 2 hours to obtain Reaction Solution C. After concentrating Reaction Solution C using a rotary evaporator, 400 mL of acetonitrile was added thereto, 29.8 g of 2-aminoethyl methacrylate hydrochloride was then added, and the internal temperature was cooled to 10°C. 58.2 mL of triethylamine was slowly added dropwise thereto, and then the mixture was reacted at room temperature for 2 hours to obtain Reaction Solution D. Reaction Solution D was poured into 1200 mL of water, and the precipitated crystals were separated by filtration. The obtained crystals were heated, stirred, and washed with methanol to obtain Intermediate (BM-1) (yield: 65.6 g) as a powder.

### (Synthesis of Exemplary Compound (B-4-3))

3.0 g of Intermediate (BM-1), 2.0 g of 2-ethylhexyl methacrylate, 0.237 g of 1-dodecanethiol, and 27.8 g of N-methylpyrrolidone (NMP) were added to a 100 mL three-neck flask and the internal temperature was raised to 85°C. 0.3 g each of V-601 (trade name, manufactured by Wako Pure Chemical Industries, Ltd.) was added 4 times every 2 hours. After completion of the reaction, the reaction solution was allowed to cool to room temperature and poured into 500 mL of water to precipitate crystals. After filtering off the crystals by filtration, the crystals were dried in a blast dryer at 60°C for one day to obtain Exemplary Compound (B-4-3) as a blue-yellow powder. The yield of Exemplary Compound (B-4-3) was 4.2 g. The absorption maximum wavelength of the UV-Vis absorption spectrum of Exemplary Compound (B-4-3) in a diluted tetrahydrofuran (THF) solution was 610 nm. In addition, the weight-average molecular weight (Mw) of Exemplary Compound (B-4-3) by GPC measurement was 9,100 (in terms of polystyrene). The Tg of the polymer in differential scanning calorimetry (DSC) was 150°C.

### (Example 1)

### [Preparation of dye polymer aqueous dispersion (1)]

0.25 g of Exemplary Compound (Y-1-1), 10 g of zirconia beads (trade name: YTZ Ball, diameter: 0.1 µm, manufactured by Nikkato Corporation), 0.05 g of sodium oleate, 0.5 g of glycerin, and 4.2 g of ultrapure water were added, and the mixture was dispersed using a planetary micro mill (PULVERISETTE 7, manufactured by Fritsch GmbH) at a rotation speed of 400 revolution per minute (rpm) for 10 hours. From the resulting dispersion, the zirconia beads were removed using a filter cloth to obtain a dye polymer aqueous dispersion (1).

### (Examples 2 to 11)

Dye polymer aqueous dispersions (2) to (11) were prepared in the same manner except that the types and amounts the dye polymer and the low molecular weight surfactant or polymer dispersant were respectively changed to those shown in Table 1 below.

**[Table 1]**

| | Dye polymer aqueous dispersion | Dye polymer used | | Low molecular weight surfactant or polymer dispersant used | |
|---|---|---|---|---|---|
| | | Type | Amount (g) | Type | Amount (g) |
| Example 1 | (1) | (Y-1-1) | 0.25 | Sodium oleate | 0.05 |
| Example 2 | (2) | (Y-1-1) | 0.5 | Sodium oleate | 0.1 |
| Example 3 | (3) | (Y-2-1) | 0.25 | Sodium oleate | 0.05 |
| Example 4 | (4) | (Y-2-1) | 0.5 | Sodium oleate | 0.1 |
| Example 5 | (5) | (R-3-1) | 0.4 | Sodium oleate | 0.8 |
| Example 6 | (6) | (B-4-3) | 0.4 | Sodium oleate | 0.8 |
| Example 7 | (7) | (R-1-1) | 0.4 | Sodium oleate | 0.8 |
| Example 8 | (8) | (R-2-1) | 0.4 | Sodium oleate | 0.8 |
| Example 9 | (9) | (B-1-1) | 0.4 | Sodium oleate | 0.8 |
| Example 10 | (10) | (B-2-1) | 0.4 | DISPERBYK-194N (trade name, manufactured by BYK-Chemie Japan K.K.) | 0.8 |
| Example 11 | (11) | (Y-2-3) | 0.4 | Absent | - |

The weight-average molecular weight of the dye polymer used, the average particle diameter of the particulate dye polymer in the obtained dye polymer aqueous dispersion, and whether or not the dye polymer melts at 200°C are as shown in Table 2. Whether or not the dye polymer melts at 200°C was checked by heating the polymer at a rate of 10°C/min up to 200°C using a melting point meter and confirming whether or not the polymer melted at a temperature of 200°C.

**[Table 2]**

| | Dye polymer aqueous dispersion | Dye polymer | Weight-average molecular weight (Mw) | Average particle diameter (Mv) | Checking whether or not dye polymer melts at 200°C |
|---|---|---|---|---|---|
| Example 1 | (1) | (Y-1-1) | 9,800 | 92 nm | Melted |
| Example 2 | (2) | (Y-1-1) | 9,800 | 92 nm | Melted |
| Example 3 | (3) | (Y-2-1) | 10,500 | 127 nm | Melted |
| Example 4 | (4) | (Y-2-1) | 10,500 | 127 nm | Melted |
| Example 5 | (5) | (R-3-1) | 8,800 | 109 nm | Melted |
| Example 6 | (6) | (B-4-3) | 9,100 | 81 nm | Melted |
| Example 7 | (7) | (R-1-1) | 7,800 | 130 nm | Melted |
| Example 8 | (8) | (R-2-1) | 8,900 | 98 nm | Melted |
| Example 9 | (9) | (B-1-1) | 7,800 | 118 nm | Melted |
| Example 10 | (10) | (B-2-1) | 10,200 | 78 nm | Melted |
| Example 11 | (11) | (Y-2-3) | 35,800 | 164 nm | Melted |

### (Example 12)

### [Preparation of inkjet printing ink (A1)]

The following components were mixed at room temperature, stirred for 15 minutes, and then filtered through a membrane filter (average pore diameter: 0.8 µm) to prepare an inkjet printing ink (A1).

| | |
|---|---|
| Dye polymer aqueous dispersion (1) | 3.0 g |
| Trimethylolpropane | 0.056 g |
| Ultrapure water | 0.913 g |
| 1,2-hexanediol | 0.112 g |
| Glycerin | 0.560 g |
| Triethylene glycol monobutyl ether | 0.112 g |
| 2-pyrrolidone | 0.168 g |
| Propylene glycol | 0.028 g |
| SURFYNOL 465 | 0.056 g |

### (trade name, manufactured by Nisshin Chemical Industry Co., Ltd.)

### [Inkjet printing method]

Inkjet printing ink (A1) was loaded in an ink cartridge. Images were printed on a polyester fabric (POLYESTER TROPICAL (manufactured by Teijin Limited), and product code A02-01019 manufactured by Shikisensha Co., Ltd.), a cotton fabric (cotton broadcloth with mercerization treatment, product code A02-01002, manufactured by Shikisensha Co., Ltd.), and a polyester 65%/cotton 35% blend fabric (blended polyester 65/cotton 35 broad, product code A02-01030, manufactured by Shikisensha Co., Ltd.), respectively, using an inkjet printer (COLORIO PX-045A, trade name, manufactured by Seiko Epson Corporation), and dried at room temperature for 12 hours. After drying, a heat treatment was carried out at a temperature of 200°C under a pressure of 0.20 N/cm² for 60 seconds using a heat press (trade name: desktop automatic flat press AF-54TEN, manufactured by Asahi Textile Machinery Co., Ltd.), whereby clear images without bleeding were obtained.

### (Examples 13 to 16 and Examples 20 to 25)

Inkjet printing inks (A2) to (A11) were prepared in the same manner as the inkjet printing ink (A1), except that the dye polymer aqueous dispersion (1) was changed to the dye polymer aqueous dispersions (2) to (11).

Inkjet printing in Examples 13 to 16 and Examples 20 to 25 was carried out in the same manner as in Example 12, except that the inkjet printing ink used was changed to the inkjet printing inks described in Tables 3, 5, and 6 below.

### (Example 17)

5 g of WACKER FINISH CT-14 (trade name, manufactured by Wacker Chemie AG) and 3 g of Matsuminsol MR50 (trade name, manufactured by Matsui Shikiso Chemical Co., Ltd.) were mixed with stirring in 92 g of water to obtain a post-treatment agent.

After an image was printed by an inkjet method in the same manner as in Example 12, the post-treatment agent was padded, immediately squeezed with a mangle at a pickup rate of 70%, and dried in a dryer at 100°C, followed by a heat treatment at a temperature of 200°C under a pressure of 0.20 N/cm² for 60 seconds using a heat press (trade name: desktop automatic flat press AF-54TEN, manufactured by Asahi Textile Machinery Co., Ltd.), whereby a clear image without bleeding was obtained.

### (Examples 18 and 19)

In Examples 18 and 19, images were obtained by the inkjet method in the same manner as in Example 17, except that the inkjet printing inks used were changed to the inkjet printing inks (A2) and (A3), respectively.

### (Synthesis of Compound (Br-1))

According to Example 1 of JP2002-509957A, a polyurethane compound (Br-1) which is a dye polymer was synthesized. The Tg of the dye polymer in differential scanning calorimetry (DSC) was 100°C. It was confirmed that melting occurred in the case where this dye polymer was heated to 200°C.

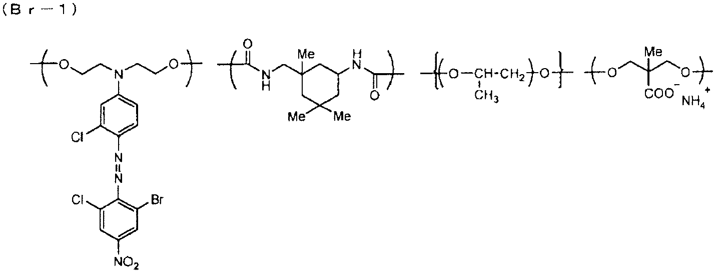

### (Synthesis of Compound (Y-3))

According to Example 6 of JP2002-509957A, a polyurethane compound (Y-3) which is a dye polymer was synthesized. The Tg of the dye polymer in differential scanning calorimetry (DSC) was 120°C. It was confirmed that melting occurred in the case where this dye polymer was heated to 200°C.

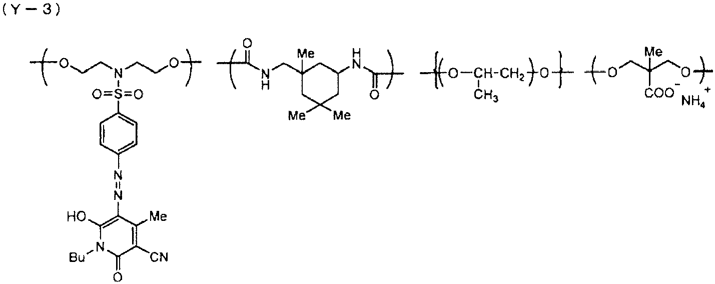

### (Synthesis of Compound (R-4))

According to Example 8 of JP2002-509957A, a polyurethane compound (R-4) which is a dye polymer was synthesized. The Tg of the dye polymer in differential scanning calorimetry (DSC) was 100°C. It was confirmed that melting occurred in the case where this dye polymer was heated to 200°C.

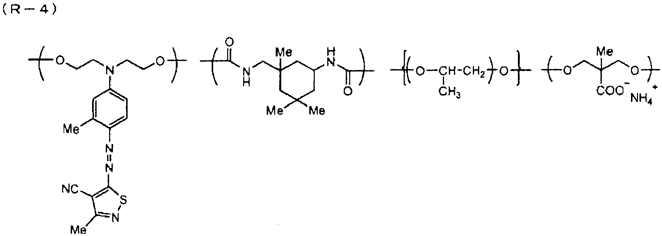

### (Synthesis of Compound (B-5))

According to Example 11 of JP2002-509957A, a polyurethane compound (B-5) which is a dye polymer was synthesized. The Tg of the dye polymer in differential scanning calorimetry (DSC) was 130°C. It was confirmed that melting occurred in the case where this dye polymer was heated to 200°C.

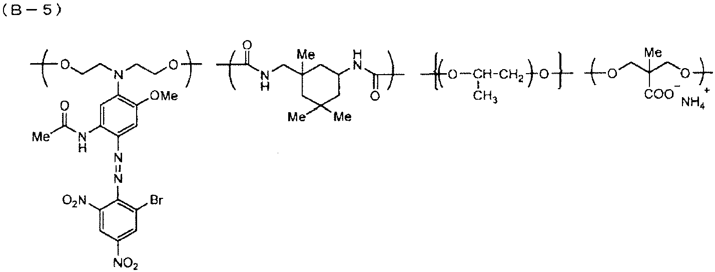

### (Example 30)

### [Preparation of dye polymer aqueous dispersion (30)]

2.0 g of polyurethane compound (Br-1), 20 g of zirconia beads (trade name: YTZ Ball, diameter: 0.1 µm, manufactured by Nikkato Corporation), and 8.0 g of ultrapure water were added, and dispersed using a planetary micro mill (PULVERISETTE 7, manufactured by Fritsch GmbH) at a rotation speed of 400 revolution per minute (rpm) for 5 hours. From the resulting dispersion, the zirconia beads were removed using a filter cloth to obtain a dye polymer aqueous dispersion (30). The average particle diameter of the particulate dye polymer in the dye polymer aqueous dispersion (30) was 130 nm.

### (Examples 31 to 33)

### [Preparation of dye polymer aqueous dispersions (31) to (33)]

Dye polymer aqueous dispersions (31) to (33) were prepared in the same manner as in Example 30, except that, in the preparation of the dye polymer aqueous dispersion (30) of Example 30, the polyurethane compound (Br-1) was changed to the polyurethane compounds (Y-3), (R-4), and (B-5), respectively. The average particle diameter of the particulate dye polymer in the dye polymer aqueous dispersion (31) was 150 nm, the average particle diameter of the particulate dye polymer in the dye polymer aqueous dispersion (32) was 180 nm, and the average particle diameter of the particulate dye polymer in the dye polymer aqueous dispersion (33) was 150 nm.

### (Example 34)

### [Preparation of inkjet printing ink (A31)]

The following components were mixed at room temperature and stirred for 15 minutes, followed by filtration through a membrane filter (average pore diameter: 0.8 µm) to prepare an inkjet printing ink (A31).

| | |
|---|---|
| Dye polymer aqueous dispersion (31) | 3.0 g |
| Trimethylolpropane | 0.056 g |
| Ultrapure water | 0.913 g |
| 1, 2-hexanediol | 0.112 g |
| Glycerin | 0.560 g |
| Triethylene glycol monobutyl ether | 0.112 g |
| 2-pyrrolidone | 0.168 g |
| Propylene glycol | 0.028 g |
| SURFYNOL 465 | 0.056 g |

(trade name, manufactured by Nisshin Chemical Industry Co., Ltd.)

### [Inkjet printing method]

Inkjet printing ink (A31) was loaded in an ink cartridge. Images were printed on a polyester fabric (POLYESTER TROPICAL (manufactured by Teijin Limited), and product code A02-01019 manufactured by Shikisensha Co., Ltd.), a cotton fabric (cotton broadcloth with mercerization treatment, product code A02-01002, manufactured by Shikisensha Co., Ltd.), and a polyester 65%/cotton 35% blend fabric (blended polyester 65/cotton 35 broad, product code A02-01030, manufactured by Shikisensha Co., Ltd.), respectively, using an inkjet printer (COLORIO PX-045A, trade name, manufactured by Seiko Epson Corporation), and dried at room temperature for 12 hours. After drying, a heat treatment was carried out at a temperature of 200°C under a pressure of 0.20 N/cm² for 60 seconds using a heat press (trade name: desktop automatic flat press AF-54TEN, manufactured by Asahi Textile Machinery Co., Ltd.), whereby clear images without bleeding were obtained.

### (Example 35)

An inkjet printing ink (A32) was prepared in the same manner as the inkjet printing ink (A31), except that the dye polymer aqueous dispersion (31) was changed to the dye polymer aqueous dispersion (32), and inkjet printing was carried out.

### (Example 36)

An inkjet printing ink (A30) was prepared in the same manner as the inkjet printing ink (A31), except that 3.0 g of the dye polymer aqueous dispersion (31) was changed to 1.5 g of the dye polymer aqueous dispersion (30) and 1.5 g of the dye polymer aqueous dispersion (33), and inkjet printing was carried out.

### (Comparative Example 1) Sublimation transfer printing

Images were printed on transfer papers using a sublimation transfer printer SureColor F6000 (trade name, manufactured by Seiko Epson Corporation). Then, images were printed on a polyester fabric (POLYESTER TROPICAL (manufactured by Teijin Limited), and product code A02-01019 manufactured by Shikisensha Co., Ltd.), a cotton fabric (cotton broadcloth with mercerization treatment, product code A02-01002, manufactured by Shikisensha Co., Ltd.), and a polyester 65%/cotton 35% blend fabric (blended polyester 65/cotton 35 broad, product code A02-01030, manufactured by Shikisensha Co., Ltd.), respectively and dried at room temperature for 12 hours. After drying, a heat treatment was carried out at a temperature of 200°C under a pressure of 0.20 N/cm² for 60 seconds using a heat press (trade name: desktop automatic flat press AF-54TEN, manufactured by Asahi Textile Machinery Co., Ltd.), whereby transferred images were obtained. A clear image was obtained for the polyester fabric, but a clear image with low dyeing density was obtained in the polyester 65%/cotton 35% blend fabric, and a very blurred image was obtained in the cotton fabric.

### (Comparative Example 2) Coloring by inkjet method using pigment

### (Preparation of pigment dispersion)

3 g of a styrene-acrylic acid copolymer (JONCRYL 678, trade name, manufactured by BASF Corporation), 1.3 g of dimethylaminoethanol and 80.7 g of ion exchange water were stirred and mixed at 70°C. Then, 15 g of C.I. Pigment Blue 15:3 and zirconia beads having a particle diameter of 0.5 mm at 50% by volume were filled and dispersed using a sand grinder mill to obtain a pigment dispersion having a cyan pigment content of 15%.

### (Preparation of aqueous binder)

50 g of 2-butanone was placed in a three-neck flask and the internal temperature was raised to 75°C. A mixture of 80 g of n-butyl methacrylate, 20 g of acrylic acid, 50 g of 2-butanone, and 0.5 g of azoisobutyronitrile was added dropwise thereto over 3 hours. After the dropwise addition, the mixture was heated under reflux for 5 hours, cooled to room temperature, and heated under reduced pressure to obtain a residue of a polymer. 350 mL of ion exchange water and a 1.05-fold molar amount of sodium hydroxide of acrylic acid added as a monomer were added thereto and then dissolved. The mixture was diluted with ion exchange water so that the total amount became 500 g to obtain a 20% aqueous solution of an aqueous binder.

### (Preparation of pigment ink and coloring by inkjet method)

46.6 g of the above pigment dispersion, 15 g of the above aqueous binder, 2.9 g of PDX-7664A (trade name, manufactured by BASF Corporation), 10 g of triethylene glycol monobutyl ether, 5 g of 1,2-hexanediol, 11.2 g of diethylene glycol, and 0.6 g of OLEFIN 465 (trade name, manufactured by Nisshin Chemical Industry Co., Ltd.) were mixed, and ion exchange water was added thereto to prepare a total amount of 100 g. The mixture was filtered through a 0.8 µm filter to obtain a comparative pigment ink.

The pigment ink thus obtained was loaded in an ink cartridge. Images were printed on a polyester fabric (POLYESTER TROPICAL (manufactured by Teijin Limited), and product code A02-01019 manufactured by Shikisensha Co., Ltd.), a cotton fabric (cotton broadcloth with mercerization treatment, product code A02-01002, manufactured by Shikisensha Co., Ltd.), and a polyester 65%/cotton 35% blend fabric (blended polyester 65/cotton 35 broad, product code A02-01030, manufactured by Shikisensha Co., Ltd.), respectively, using an inkjet printer (COLORIO PX-045A, trade name, manufactured by Seiko Epson Corporation), and dried at room temperature for 12 hours. After drying, a heat treatment was carried out at a temperature of 100°C under a pressure of 0.20 N/cm² for 60 seconds using a heat press (trade name: desktop automatic flat press AF-54TEN, manufactured by Asahi Textile Machinery Co., Ltd.), whereby colored fabrics printed with a pigment ink were obtained.

The evaluation results of Examples 12 to 25, 34 to 36, and Comparative Examples 1 and 2 are shown in Tables 3 to 7. Evaluation of the colored fabrics is a result obtained by performing the following method. In the evaluation of the texture and wet rubbing fastness, a cotton fabric was used among three types of fabrics.
- Image clarity: Sensory evaluation by visual observation was carried out. Evaluation was carried out in four stages: A for the case where all three types of fabrics exhibit a clear image, B for the case where two types of fabrics exhibit a clear image, C for the case where only one type of fabric exhibits a clear image, and D for the case where there is no clear image.
- Texture: The untreated fabric before dyeing and the colored fabric after dyeing were touched by hand, and the texture of the colored fabrics was sensibly evaluated. 10 points were given for excellent texture of the colored fabric which is close to that of the untreated fabric, and 0 points were given for the others. This evaluation was carried out by 10 persons, and numerical values of the total points are shown in Tables 3 to 7 below. A larger numerical value indicates an excellent texture close to that of the untreated fabric (100 (points)).
- Wet rubbing fastness: It was evaluated based on JIS L-0849 (revised in 2013) Gakushin type rubbing test (class 5 method).

The evaluation results of wet rubbing fastness show that the larger the numerical value, the better the fastness.

**[Table 3]**

| | Example 12 | Example 13 | Example 14 | Example 15 | Example 16 |
|---|---|---|---|---|---|
| Dye polymer aqueous dispersion | (1) | (2) | (3) | (4) | (5) |
| Inkjet printing ink | (A1) | (A2) | (A3) | (A4) | (A5) |
| Post-treatment agent | Absent | Absent | Absent | Absent | Absent |
| Image clarity | A | A | A | A | A |
| Texture | 90 | 90 | 90 | 90 | 90 |
| Wet rubbing fastness | 2 to 3 | 2 to 3 | 2 to 3 | 2 to 3 | 3 |

**[Table 4]**

| | Example 17 | Example 18 | Example 19 | Comparative Example 1 | Comparative Example 2 |
|---|---|---|---|---|---|
| Dye polymer aqueous dispersion | (1) | (2) | (3) | - | - |
| Inkjet printing ink | (A1) | (A2) | (A3) | - | - |
| Post-treatment agent | Present | Present | Present | Absent | Absent |
| Image clarity | A | A | A | C | A |
| Texture | 90 | 90 | 90 | 100 | 80 |
| Wet rubbing fastness | 3 to 4 | 3 to 4 | 3 to 4 | 3 to 4 | 1 |

**[Table 5]**

| | Example 20 | Example 21 | Example 22 | Example 23 | Example 24 |
|---|---|---|---|---|---|
| Dye polymer aqueous dispersion | (6) | (7) | (8) | (9) | (10) |
| Inkjet printing ink | (A6) | (A7) | (A8) | (A9) | (A10) |
| Post-treatment agent | Absent | Absent | Absent | Absent | Absent |
| Image clarity | A | A | A | A | A |
| Texture | 90 | 90 | 90 | 100 | 90 |
| Wet rubbing fastness | 3 to 4 | 3 to 4 | 3 to 4 | 3 to 4 | 3 to 4 |

**[Table 6]**

| | Example 25 |
|---|---|
| Dye polymer aqueous dispersion | (11) |
| Inkjet printing ink | (A11) |
| Post-treatment agent | Absent |
| Image clarity | A |
| Texture | 100 |
| Wet rubbing fastness | 3 |

**[Table 7]**

| | Example 34 | Example 35 | Example 36 |
|---|---|---|---|
| Dye polymer aqueous dispersion | (31) | (32) | (30) and (33) |
| Inkjet printing ink | (A31) | (A32) | (A30) |
| Post-treatment agent | Absent | Absent | Absent |
| Image clarity | A | A | A |
| Texture | 90 | 90 | 90 |
| Wet rubbing fastness | 2 to 3 | 2 to 3 | 2 to 3 |

### (Examples 37 to 39)

The dye polymer aqueous dispersions (2), (4), and (31) were allowed to stand at room temperature for one month, and the average particle diameter thereof before being allowed to stand (initial) and after being allowed to stand (after aging) was measured, from which the ratio of the average particle diameter after aging to the initial average particle diameter was determined and the temporal stability was evaluated. The closer the ratio of the average particle diameter after aging to the initial average particle diameter is to 1, the better the stability. Table 8 also shows the amount of ionic groups in the dye polymer. The amount of ionic groups was calculated by dissolving the dye polymer before dispersion in N-methylpyrrolidone and titrating with a 0.1 mol/L sodium hydroxide aqueous solution.

**[Table 8]**

| | Dye polymer aqueous dispersion | Dye polymer | Amount of ionic groups | Average particle diameter after aging/initial average particle diameter |
|---|---|---|---|---|
| Example 37 | (2) | (Y-1-1) | 0.0 mmol/g | 1.10 |
| Example 38 | (4) | (Y-2-1) | 1.2 mmol/g | 1.03 |
| Example 39 | (31) | (Y-3) | 0.7 mmol/g | 1.05 |

As is clear from the above results, it can be seen that, by using the inkjet printing method according to the Examples of the present invention, it is possible to provide a dyed fabric having fabric versatility (which gives a clear image on a variety of fabrics) and having good texture and wet rubbing fastness. In addition, in the inkjet printing method according to the Examples of the present invention, a pretreatment step is unnecessary and no wastewater or waste material is produced, so that it is excellent in environmental load and there is no problem in workability.

According to the present invention, it is possible to provide an inkjet printing method capable of dyeing various kinds of fabrics, requiring no pretreatment step, having less environmental load, having no problem in workability, exhibiting excellent clarity and fastness of an image to be obtained, and also exhibiting excellent quality (texture) of colored fabric. Further, according to the present invention, it is possible to provide an inkjet ink capable of dyeing various kinds of fabrics, requiring no pretreatment step, having less environmental load, having no problem in workability, and capable of providing an image having excellent clarity and fastness and a colored fabric having excellent quality (texture); an ink cartridge filled with an inkjet ink; and a colored fabric.

While the invention has been described in detail and with reference to specific embodiments, it will be apparent to those skilled in the art that various changes and modifications can be made without departing from the spirit and scope of the invention.

This application is based on Japanese Patent Application No. 2016-16399, filed on January 29, 2016 and Japanese Patent Application No. 2017-11581, filed on January 25, 2017, the entire contents of which are incorporated herein by reference.

## Claims

1. An inkjet printing method, comprising:
at least a step of directly printing an inkjet ink containing an aqueous dispersion of a dye polymer having a repeating unit containing a structure derived from a dye on a fabric by an inkjet method.

2. The inkjet printing method according to claim 1, further comprising:
a heat treatment step.

3. The inkjet printing method according to claim 1 or 2, wherein the inkjet ink further contains an aqueous organic solvent.

4. The inkjet printing method according to any one of claims 1 to 3, wherein the dye is a dye selected from azo, stilbene, diarylmethane, triarylmethane, xanthene, acridine, quinoline, polymethine, monomethine, azomethine, indoaniline, indophenol, nigrosine, oxazine, thiazine, anthraquinone, indigo, quinophthalone, porphyrin, cyanine, and phthalocyanine.

5. The inkjet printing method according to any one of claims 1 to 4, wherein the dye polymer is a dye polymer having a repeating unit represented by General Formula (1) or (10) as the repeating unit containing a structure derived from a dye, 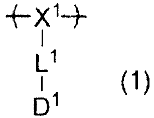 in General Formula (1), X¹ represents a linking group, L¹ represents a single bond or a divalent linking group, and D¹ represents a dye residue obtained by removing one hydrogen atom from a dye, and
(̵X²-D²-X³)̵ (10)
in General Formula (10), X² and X³ each independently represent a linking group, and D² represents a dye residue obtained by removing two hydrogen atoms from a dye.

6. The inkjet printing method according to claim 5, wherein D¹ in General Formula (1) or D² in General Formula (10) represents a dye residue obtained by removing one or two hydrogen atoms from a dye represented by any one of General Formulae (M1) to (M9), 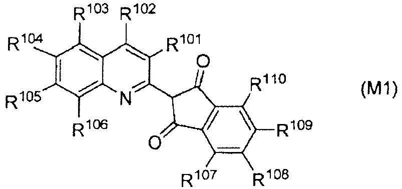 in General Formula (M1), R¹⁰¹ to R¹¹⁰ each independently represent a hydrogen atom or a substituent, 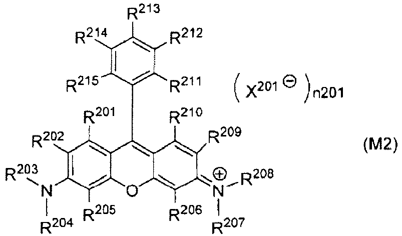 in General Formula (M2), R²⁰¹ to R²¹⁵ each independently represent a hydrogen atom or a substituent, X²⁰¹ represents a monovalent anion, and n201 represents 0 or 1, 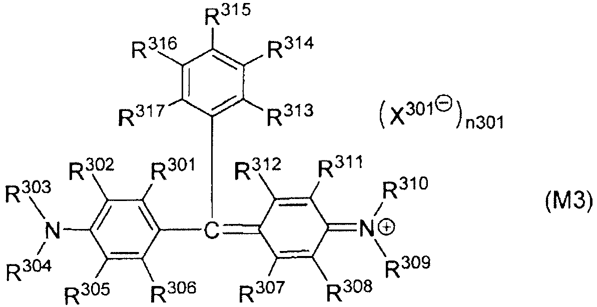 in General Formula (M3), R³⁰¹ to R³¹⁷ each independently represent a hydrogen atom or a substituent, X³⁰¹ represents a monovalent anion, and n301 represents 0 or 1, 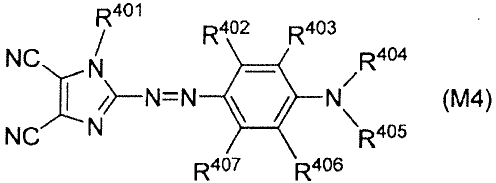 in General Formula (M4), R⁴⁰¹ to R⁴⁰⁷ each independently represent a hydrogen atom or a substituent, 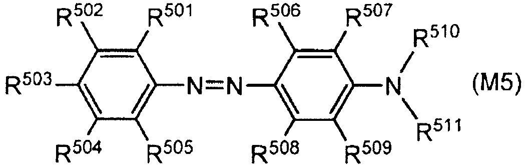 in General Formula (M5), R⁵⁰¹ to R⁵¹¹ each independently represent a hydrogen atom or a substituent, 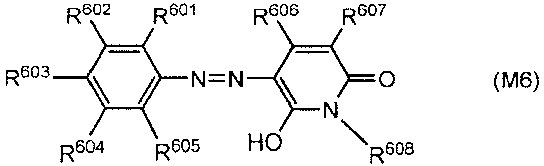 in General Formula (M6), R⁶⁰¹ to R⁶⁰⁸ each independently represent a hydrogen atom or a substituent, 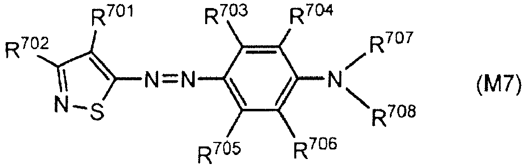 in General Formula (M7), R⁷⁰¹ to R⁷⁰⁸ each independently represent a hydrogen atom or a substituent, 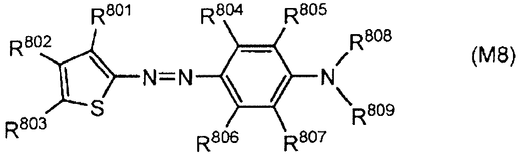 in General Formula (M8), R⁸⁰¹ to R⁸⁰⁹ each independently represent a hydrogen atom or a substituent, and 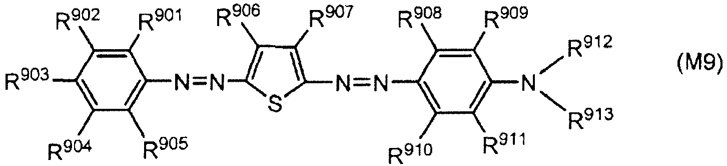 in General Formula (M9), R⁹⁰¹ to R⁹¹³ each independently represent a hydrogen atom or a substituent.

7. The inkjet printing method according to claim 6, wherein D¹ in General Formula (1) or D² in General Formula (10) represents a dye residue obtained by removing one or two hydrogen atoms from a dye represented by any one of General Formulae (M1) to (M4).

8. The inkjet printing method according to any one of claims 1 to 7, wherein the dye polymer is an acrylic polymer, a urethane polymer, or a styrene polymer.

9. The inkjet printing method according to any one of claims 1 to 8, wherein an amount of an ionic group in the dye polymer is 0.1 to 1.8 mmol/g.

10. The inkjet printing method according to any one of claims 1 to 9, wherein the dye polymer has a glass transition point of 200°C or lower.

11. The inkjet printing method according to any one of claims 1 to 10, wherein the dye polymer melts at 200°C or lower.

12. The inkjet printing method according to any one of claims 1 to 11, wherein the dye polymer in the aqueous dispersion of the dye polymer is a particulate dye polymer, and the particulate dye polymer has an average particle diameter of 50 to 500 nm.

13. The inkjet printing method according to any one of claims 1 to 12, wherein the dye polymer has a weight-average molecular weight of 3,000 to 2,000,000.

14. An inkjet ink for printing, comprising:
at least an aqueous dispersion of a dye polymer having a repeating unit containing a structure derived from a dye.

15. The inkjet ink according to claim 14, wherein the dye polymer is a dye polymer having a repeating unit represented by General Formula (1) or (10) as the repeating unit containing a structure derived from a dye, 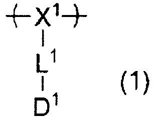 in General Formula (1), X¹ represents a linking group, L¹ represents a single bond or a divalent linking group, and D¹ represents a dye residue obtained by removing one hydrogen atom from a dye, and
(̵X²-D²-X³)̵ (10)
in General Formula (10), X² and X³ each independently represent a linking group, and D² represents a dye residue obtained by removing two hydrogen atoms from a dye.

16. The inkjet ink according to claim 15, wherein D¹ in General Formula (1) or D² in General Formula (10) represents a dye residue obtained by removing one or two hydrogen atoms from a dye represented by any one of General Formulae (M1) to (M9), 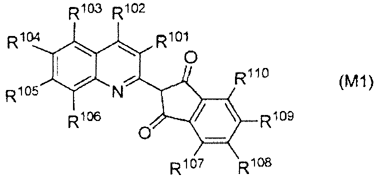 in General Formula (M1), R¹⁰¹ to R¹¹⁰ each independently represent a hydrogen atom or a substituent, 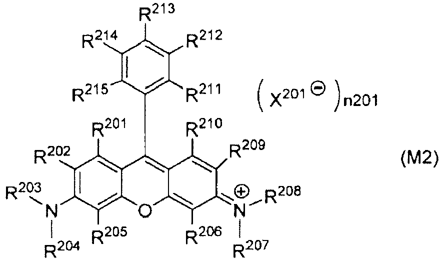 in General Formula (M2), R²⁰¹ to R²¹⁵ each independently represent a hydrogen atom or a substituent, X²⁰¹ represents a monovalent anion, and n201 represents 0 or 1, 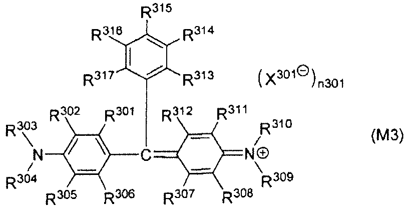 in General Formula (M3), R³⁰¹ to R³¹⁷ each independently represent a hydrogen atom or a substituent, X³⁰¹ represents a monovalent anion, and n301 represents 0 or 1, 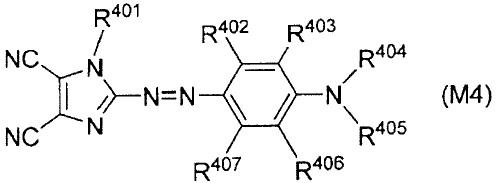 in General Formula (M4), R⁴⁰¹ to R⁴⁰⁷ each independently represent a hydrogen atom or a substituent, 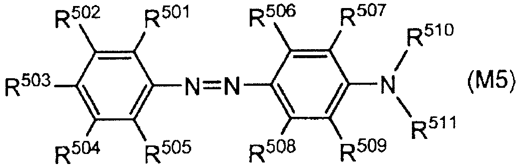 in General Formula (M5), R⁵⁰¹ to R⁵¹¹ each independently represent a hydrogen atom or a substituent, 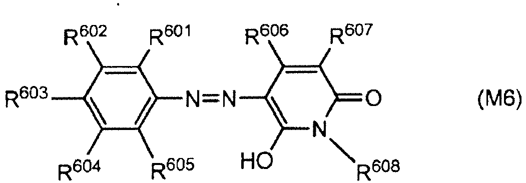 in General Formula (M6), R⁶⁰¹ to R⁶⁰⁸ each independently represent a hydrogen atom or a substituent, 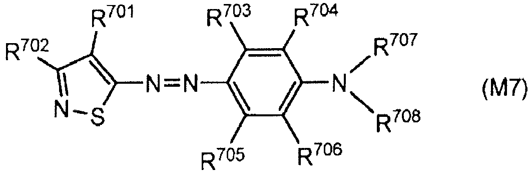 in General Formula (M7), R⁷⁰¹ to R⁷⁰⁸ each independently represent a hydrogen atom or a substituent, 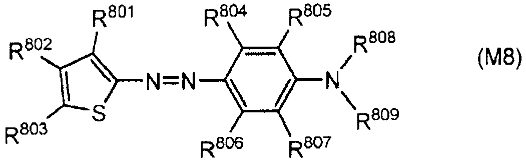 in General Formula (M8), R⁸⁰¹ to R⁸⁰⁹ each independently represent a hydrogen atom or a substituent, and 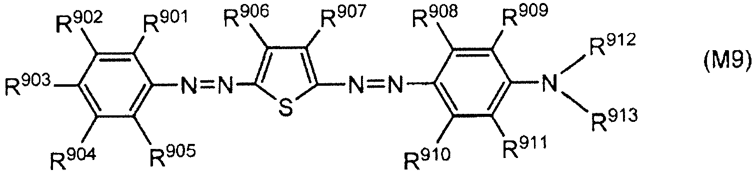 in General Formula (M9), R⁹⁰¹ to R⁹¹³ each independently represent a hydrogen atom or a substituent.

17. The inkjet ink according to claim 16, wherein D¹ in General Formula (1) or D² in General Formula (10) represents a dye residue obtained by removing one or two hydrogen atoms from a dye represented by any one of General Formulae (M1) to (M4).

18. The inkjet ink according to any one of claims 14 to 17, wherein the dye polymer is an acrylic polymer, a urethane polymer, or a styrene polymer.

19. The inkjet ink according to any one of claims 14 to 18, wherein an amount of an ionic group in the dye polymer is 0.1 to 1.8 mmol/g.

20. The inkjet ink according to any one of claims 14 to 19, wherein the dye polymer has a glass transition point of 200°C or lower.

21. The inkjet ink according to any one of claims 14 to 20, wherein the dye polymer melts at 200°C or lower.

22. The inkjet ink according to any one of claims 14 to 21, further comprising:
an aqueous organic solvent.

23. The inkjet ink according to any one of claims 14 to 22, wherein the dye polymer in an aqueous dispersion of the dye polymer having a repeating unit containing a structure derived from a dye is a particulate dye polymer and the particulate dye polymer has an average particle diameter of is 50 to 500 nm.

24. The inkjet ink according to any one of claims 14 to 23, wherein the dye polymer has a weight-average molecular weight of 3,000 to 2,000,000.

25. An ink cartridge filled with the inkjet ink according to any one of claims 14 to 24.

26. A colored fabric, comprising:
a fabric; and
a dye polymer having a repeating unit containing a structure derived from a dye.

27. The colored fabric according to claim 26, wherein the dye polymer is a dye polymer having a repeating unit represented by General Formula (1) or (10), 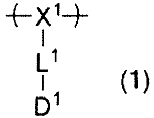 in General Formula (1), X¹ represents a linking group, L¹ represents a single bond or a divalent linking group, and D¹ represents a dye residue obtained by removing one hydrogen atom from a dye, and
(̵X²-D²-X³)̵ (10)
in General Formula (10), X² and X³ each independently represent a linking group, and D² represents a dye residue obtained by removing two hydrogen atoms from a dye.

28. The colored fabric according to claim 27, wherein D¹ in General Formula (1) or D² in General Formula (10) represents a dye residue obtained by removing one or two hydrogen atoms from a dye represented by any one of General Formulae (M1) to (M9), 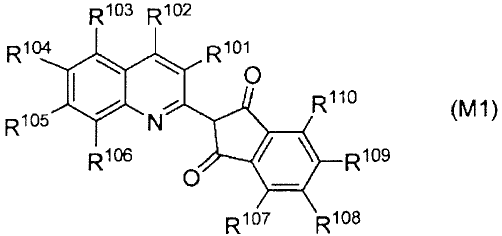 in General Formula (M1), R¹⁰¹ to R¹¹⁰ each independently represent a hydrogen atom or a substituent, 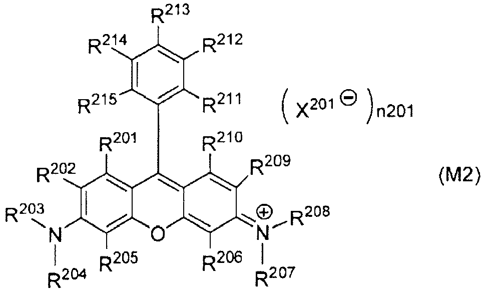 in General Formula (M2), R²⁰¹ to R²¹⁵ each independently represent a hydrogen atom or a substituent, X²⁰¹ represents a monovalent anion, and n201 represents 0 or 1, 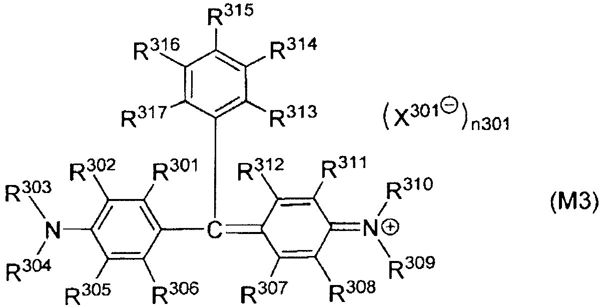 in General Formula (M3), R³⁰¹ to R³¹⁷ each independently represent a hydrogen atom or a substituent, X³⁰¹ represents a monovalent anion, and n301 represents 0 or 1, 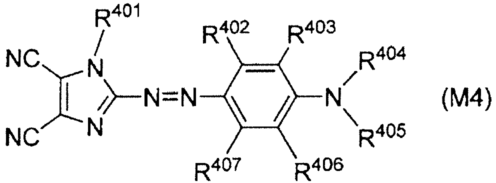 in General Formula (M4), R⁴⁰¹ to R⁴⁰⁷ each independently represent a hydrogen atom or a substituent, 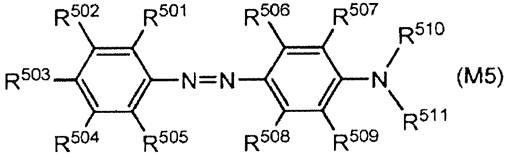 in General Formula (M5), R⁵⁰¹ to R⁵¹¹ each independently represent a hydrogen atom or a substituent, 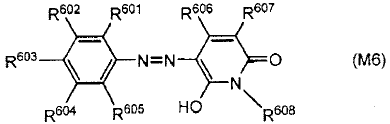 in General Formula (M6), R⁶⁰¹ to R⁶⁰⁸ each independently represent a hydrogen atom or a substituent, 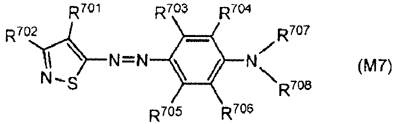 in General Formula (M7), R⁷⁰¹ to R⁷⁰⁸ each independently represent a hydrogen atom or a substituent, 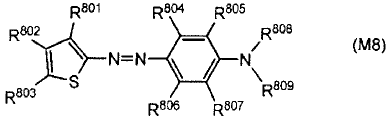 in General Formula (M8), R⁸⁰¹ to R⁸⁰⁹ each independently represent a hydrogen atom or a substituent, and 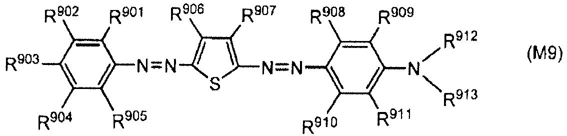 in General Formula (M9), R⁹⁰¹ to R⁹¹³ each independently represent a hydrogen atom or a substituent.

29. The colored fabric according to claim 28, wherein D¹ in General Formula (1) or D² in General Formula (10) represents a dye residue obtained by removing one or two hydrogen atoms from a dye represented by any one of General Formulae (M1) to (M4).
